(19) Europäisches Patentamt
European Patent Office
Office européen des brevets

(11) **EP 4 143 001 B1**

(12) **EUROPÄISCHE PATENTSCHRIFT**

(45) Veröffentlichungstag und Bekanntmachung des Hinweises auf die Patenterteilung:
**14.02.2024   Patentblatt 2024/07**

(21) Anmeldenummer: **21722787.5**

(22) Anmeldetag: **27.04.2021**

(51) Internationale Patentklassifikation (IPC):
**B29C 48/65** (2019.01)   **B29C 48/66** (2019.01)
**B29C 45/60** (2006.01)   **B29C 48/39** (2019.01)
**B29C 48/45** (2019.01)   **B29C 45/03** (2006.01)

(52) Gemeinsame Patentklassifikation (CPC):
**B29C 45/60; B29C 48/39; B29C 48/45; B29C 48/507; B29C 48/65; B29C 48/66;**
B29C 45/03; B29C 48/61

(86) Internationale Anmeldenummer:
**PCT/EP2021/060898**

(87) Internationale Veröffentlichungsnummer:
**WO 2021/219586 (04.11.2021 Gazette 2021/44)**

(54) **PLASTIFIZIEREINHEIT**

PLASTICIZING UNIT

UNITÉ DE PLASTIFICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2020   DE 102020111510**

(43) Veröffentlichungstag der Anmeldung:
**08.03.2023   Patentblatt 2023/10**

(73) Patentinhaber: **KraussMaffei Technologies GmbH**
**85599 Parsdorf (DE)**

(72) Erfinder:
• **SCHIERL, Stefan**
**82110 Germering Bayern (DE)**
• **BIERBAUMER, Andreas**
**83134 Prutting (DE)**
• **DROGI, Thomas**
**84032 Altdorf / Eugenbach (DE)**
• **WÜRTELE, Martin**
**86316 Friedberg (DE)**
• **GIESGEN, Lazlo**
**52070 Aachen (DE)**

(74) Vertreter: **Wilhelm, Ludwig**
**KraussMaffei Group GmbH**
**- Patentabteilung TS -**
**Krauss-Maffei-Strasse 2**
**80997 München (DE)**

(56) Entgegenhaltungen:
WO-A1-01/17750     JP-A- S5 328 656
JP-A- 2013 208 779     US-A- 3 687 423
US-A- 6 056 430

**Beschreibung**

Die Erfindung betrifft eine Plastifiziereinheit zur Verarbeitung eines Gemischs aus einem Kunststoffmaterial und einem Füllstoff, insbesondere einem Fasermaterial, wobei die Plastifiziereinheit einen Zylinder und eine Schnecke aufweist, mit welcher das Kunststoffmaterial aufgeschmolzen und mit dem Füllmaterial, insbesondere dem Fasermaterial vermischt wird, so dass eine Schmelze erzeugt wird, die einer weiteren Verwendung zugeführt werden kann, beispielsweise einem Spritzgießverfahren oder einem Extrusionsverfahren.

Aus dem Stand der Technik sind Schnecken mit einer sogenannten Wave-Geometrie oder einer sogenannten Energie-Transfer-Geometrie bekannt. Solche Schnecken werden auch als Wave-Schnecken bzw. als Energy-Transfer-Schnecken bezeichnet. Wave-Schnecken sind beispielsweise aus den Patentdokumenten US 4,285,600 und US 4,356,140 bekannt. Eine Energy-Transferschnecke ist in DE 10 2012 008 023 B4 offenbart. Es handelt sich hierbei um Schnecken für die Verarbeitung eines Kunststoffmaterials in einem Einschnecken-Extruder, d.h. die Schnecke ist ausschließlich drehangetrieben. Die Wave-Geometrie wird im Wesentlichen für ein schonendes und schnelles Aufschmelzen des zugeführten Kunststoffmaterials genutzt. Ebenso wird mit der Wave-Geometrie eine bessere Mischwirkung im Vergleich zu Standardschnecken erzielt. Bei den vorgenannten Wave- und Energy-Transferschnecken wird ein abgesetzter Sperrsteg zwischen zwei Schneckengängen vorgesehen, um Kunststoffschmelze von einem Gang in den anderen Gang zu befördern, d.h. um eine Aufteilung von Schmelzeströmen zu erzielen.

Spritzgießmaschinen für die Verarbeitung von mit Fasern vermischtem Kunststoffmaterial sind bekannt aus EP 3098052 B1 und US 2018/0022003 A1. Bei diesen Spritzgießmaschinen kommt eine dreh- und linearangetriebene Schnecke zum Einsatz. Man bezeichnet eine solche Schnecke auch als Schubschnecke.

Bei der aus EP3098052 B1 bekannten Schnecke gibt es einen ersten Abschnitt, in dem das zugeführte Kunststoffmaterial geschmolzen wird. Förderabseitig schließt sich ein zweiter Abschnitt an, an dessen Anfang ein Fasermaterial zugeführt wird. In diesem Abschnitt ist ein Barrieresteg angeordnet, der einen größeren Abstand zu der Zylinderinnenwand bildet als der einen Schneckengang begrenzende Sperrsteg. Dadurch kann ein Rückfluss von geschmolzenem Kunststoffmaterial von einem Schneckengang der stromabwärtigen Seite des Barrierestegs in Richtung eines Schneckengangs der stromaufwärtigen Seite des Barrierestegs erzeugt werden. Die EP3098052B1 offenbart verschiedene Ausführungsformen an Barrierestegen.

Die US 2018/0022003 A1 offenbart eine Plastifiziereinheit zur Verarbeitung eines Kunststoff-Faser-Gemischs, wobei das Kunststoffmaterial und das Fasermaterial zusammen über einen Trichter in den Zylinder eingeführt werden. Die Schnecke dieser Plastifiziereinheit verfügt ebenfalls über einen Barrieresteg. Zusätzlich ist an einer Stelle ein Übergangsstück vorgesehen, um das Kunststoff-Faser-Gemisch einer starken Kompression zu unterwerfen.

Die WO 2019/076561 A1 offenbart die Verarbeitung einer faserbeladenen Kunststoffschmelze unter Verwendung einer Schnecke mit einem Scherteil am vorderen Ende der Schnecke.

Die Druckschriften JP S53 28656 A, US 6 056 430 A, WO 01/17750 A1, US 3 687 423 A und JP 2013 208779 A offenbaren weitere Plastifiziereinheiten für Kunstoffverarbeitende Maschinen.

Der Erfindung liegt die Aufgabe zugrunde, eine Plastifiziereinheit der eingangs genannten Art anzugeben, mit der es möglich ist, eine Schmelze aus einem Kunststoffmaterial mit darin befindlichem Füllstoff, insbesondere einem Fasermaterial, bereitzustellen, wobei am in Förderrichtung der Schmelze gesehen vorderen Ende der Schnecke und somit am Ausgang der Plastifiziereinheit eine möglichst homogene Verteilung des Füllstoffs bzw des Fasermaterials in der Schmelze vorliegt.

Die Lösung dieser Aufgabe erfolgt durch die Merkmale von Anspruch 1. Vorteilhafte Ausgestaltungen und Weiterentwicklungen finden sich in den abhängigen Ansprüchen.

Die erfindungsgemäße Lösung geht von folgenden Überlegungen aus.

Um sicherzugehen, dass am stromabwärtsgelegenen Ende der Schnecke (vorne) eine homogene Verteilung an Füllstoff in der Schmelze vorliegt, ist es erforderlich, dass möglichst jedes aus einzelnen Füllstoffpartikeln zusammengesetzte Füllstoffagglomerat, einen materialabhängigen Mindestbetrag an Schergeschwindigkeit zum zerteilenden (dispersiven) Mischen sowie einen Mindestbetrag an Scherzeit im Scherfeld zum verteilenden (distributiven) Mischen erfährt. Daraus resultiert auch ein Mindestbetrag an Scherdeformation, welche das Produkt aus Schwergeschwindigkeit und Scherzeit ist.

Im Unterschied zur vorliegenden Erfindung ist ein Mindestbetrag an Scherdeformation für jedes Agglomerat bei den eingangs genannten Wave-Schnecken nicht sichergestellt, da hier maßgeblich nur durch die Gipfel bzw. Spitzen der Wellenberge Druck- und Schubspannungen erzeugt werden. Bei den eingangs genannten Energy-Transferschnecken kann die Schmelze zusätzlich über den relativ schmalen Schersteg mit einer daraus resultierenden sehr geringen Scherzeit in den benachbarten Wave-Schneckengang ausweichen. Dadurch bleibt auch die auf die Agglomerate ausgeübte Scherdeformation relativ gering. Somit können am Schneckenende noch nicht aufgelöste Agglomerate an Partikeln bzw. Füllstoff vorliegen.

Bei Füllstoffen, deren räumliche Ausdehnung in einer Raumrichtung deutlich größer ist als in die anderen Raumrichtungen stellt sich zudem die Herausforderung, dass diese Füllstoffe meist nur dann homogen verteilt werden können, wenn diese quer zu Fließrichtung über einen Wellenberg eines Wave-Schneckengangs strömen. Ursache hierfür ist, dass diese länglichen Füllstoffe in Längsrichtung in der Regel sehr gute mechanische Eigenschaften aufweisen. Falls solche Füllstoffe in Längsrichtung, d.h. parallel zur Strömungsrichtung der Schmelze liegend, über einen Wave-Hügel oder eine andere Fließbarriere strömen, werden diese Füllstoffe nicht oder nur in geringem Maße von den auf sie einwirkenden Schubspannungen beeinflusst.

Gemäß einem Kerngedanken der Erfindung soll daher eine Plastifiziereinheit mit einer Schnecke vorgesehen sein, welche eine abgewandelte Wave-Geometrie aufweist, um den vorstehenden Überlegungen Rechnung zu tragen. Mit einer erfindungsgemäß abgewandelten Wave-Geometrie soll sichergestellt sein, dass ein beliebiges Agglomerat an Partikeln eines Füllstoffs unabhängig von seinem Fließweg immer einen Mindestbetrag an Scherdeformation t erfährt und zwar ohne dass die Partikel des Agglomerats mechanisch beschädigt werden. Wenn es sich bei einem Partikel beispielsweise um eine einzelne Faser handelt bedeutet dies, dass diese Faser nicht signifikant in ihrer Länge beschädigt, d.h. gekürzt wird.

Basierend auf den vorstehenden Überlegungen wird eine Plastifiziereinheit für eine Kunststoff verarbeitende Maschine vorgeschlagen, insbesondere für eine Spritzgießmaschine oder eine Extrusionsanlage, welche einen Zylinder und eine darin drehbar gelagerte Schnecke aufweist, wobei die Schnecke einen gemäß der Erfindung als Scherabschnitt ausgebildeten Schneckenabschnitt aufweist. In dem erfindungsgemäß gestalteten Scherabschnitt weist die Schnecke einen schraubenförmig um den Schneckenkern umlaufenden Sperrsteg und einen von dem Sperrsteg eingeschlossenen Haupt-Schneckengang auf. In dem Haupt-Schneckengang ist ein vorzugsweise parallel zu dem Sperrsteg verlaufender Schersteg angeordnet, der zumindest abschnittsweise eine geringere Höhe aufweist als der Sperrsteg. In diesen Abschnitten bildet die Oberfläche des Scherstegs eine Schersteg-Scherfläche. In dem Haupt-Schneckengang werden somit zwei parallel verlaufende und durch den Schersteg voneinander beabstandete Wave-Schneckengänge ausgebildet. Jeder dieser Wave-Schneckengänge weist einen in Förderrichtung der Schmelze gesehen wellenförmig verlaufenden Ganggrund auf, wobei die Wellenberge des einen Wave-Schneckengangs in Förderrichtung der Schmelze gesehen versetzt zu den Wellenbergen des anderen Wave-Schneckengangs liegen. In jedem Wave-Schneckengang sind ein oder mehrere Wellenberge mit einer als Plateau ausgebildeten und eine Wellenberg-Scherfläche bildende Oberfläche vorgesehen. Die Länge Lw einer Wellenberg-Scherfläche ist in Förderrichtung der Schmelze gesehen vergleichsweise lang ausgebildet, insbesondere im Vergleich zur Breite des Sperrstegs und/oder die Breite des Scherstegs ist zumindest abschnittsweise vergleichsweise breit ausgebildet, insbesondere im Vergleich zur Breite des Sperrstegs und zwar vorzugsweise in den als Schersteg-Scherfläche ausgebildeten Abschnitten der Oberfläche des Scherstegs.

Die Ausbildung einer Wellenberg-Scherfläche als Plateau bedeutet, dass die Oberfläche eines Wave-Schneckengangs in dem Bereich der Wellenberg-Scherfläche einen konstanten Radius in Bezug auf die Längsachse der Schnecke besitzt. Dieser Bereich einer Wellenberg-Scherfläche besitzt eine Länge Lw in Förderrichtung der Schmelze gesehen. Dies bedeutet, dass die Oberfläche des Wave-Schneckengangs über diese Länge Lw einen konstanten Radius in Bezug auf die Längsachse der Schnecke besitzt. In einer abgewickelten Ansicht bildet eine Wellenberg-Scherfläche eine Ebene. Diese Ebene hat in Förderrichtung der Schmelze gesehen eine Länge entsprechend der Länge Lw der Wellenberg-Scherfläche. Die Breite dieser Ebene entspricht der Breite des Wave-Schneckengangs.

Die Wellenberg-Scherfläche kann als Rechteck oder als Parallelogramm ausgebildet sein. In beiden Fällen ergibt sich - quer zur Förderrichtung der Schmelze gesehen - eine konstante Länge Lw der Wellenberg-Scherfläche über die gesamte Breite des Wave-Schneckengangs. Mit anderen Worten ausgedrückt bedeutet dies folgendes. Parallel zum Schersteg und entlang eines Weges vom Schersteg zum Sperrsteg (oder umgekehrt) bleibt die Länge Lw konstant. Die Länge Lw entspricht der Seitenlänge des Rechtecks oder des Parallelogramms an derjenigen Seite des Rechtecks oder des Parallelogramms, welche an den Schersteg grenzt. Dies gilt ebenso in Bezug auf diejenige Seite des Rechtecks oder des Parallelogramms, welche an den Sperrsteg grenzt.

Die Wellenberg-Scherfläche kann aber auch eine andere Gestalt aufweisen. Beispielsweise könnte die Wellenberg-Scherfläche als ein Trapez oder ein sonstiges Polygon ausgebildet sein. In diesen Fällen soll die Länge Lw als die minimale Ausdehnung $L_{min}$ der so gestalteten Wellenberg-Scherfläche in Förderrichtung der Schmelze gesehen definiert sein. Mit anderen Worten ausgedrückt bedeutet dies folgendes. Es gibt eine parallel zum Schersteg bzw. zum Sperrsteg verlaufende Linie in der Wellenberg-Scherfläche, welche die vorgenannte minimale Länge $L_{min}$ aufweist. Diese Linie der Länge $L_{min}$ stellt die Referenz dar für die Länge Lw der so gebildeten Wellenberg-Scherfläche. Dies bedeutet, dass die Länge $L_{min}$ als Länge Lw einer so gestalteten Wellenberg-Scherfläche zu betrachten ist.

Gemäß einer ersten Ausführungsform kann vorgesehen sein, dass in Bezug auf den Schneckendurchmesser D die Länge Lw einer Wellenberg-Scherfläche in Förderrichtung der Schmelze gesehen ein Maß von mindestens 0,15xD, vorzugsweise größer oder gleich 0,20xD, ganz besonders bevorzugt größer oder gleich 0,30xD aufweist. Zusätzlich oder alternativ dazu kann vorgesehen sein, dass die Breite des Scherstegs zumindest abschnittsweise ein Maß von mindestens 0,15xD, vorzugsweise größer oder gleich 0,20xD, ganz besonders bevorzugt größer oder gleich 0,30xD aufweist. Die Breite des Scherstegs kann vorzugsweise in den als Schersteg-Scherfläche (SFs) ausgebildeten Abschnitten der Oberfläche des Scherstegs das vorgenannte Maß aufweisen.

Die Oberfläche des Scherstegs bildet mit der Innenwand des Zylinders einen Schersteg-Scherspalt und die Oberfläche einer Wellenberg-Scherfläche bildet mit der Innenwand des Zylinders einen Wellenberg-Scherspalt. Gemäß einer Ausgestaltung der Erfindung kann die Größe des Schersteg-Scherspaltes zumindest im Bereich einer Schersteg-Scherfläche einen Wert zwischen 0,1mm bis 1,2mm aufweisen und/oder die Größe des Wellenberg-Scherspaltes kann einen Wert zwischen 0,1mm bis 1,2mm aufweisen.

Gemäß einer weiteren Ausgestaltung kann vorgesehen sein, dass die Größe des Schersteg-Scherspaltes zumindest im Bereich einer Schersteg-Scherfläche (SFS) einen Wert zwischen 0,2mm bis 2,0mm, vorzugsweise zwischen 0,3mm bis 0,9mm, ganz besonders bevorzugt zwischen 0,4mm bis 0,8mm, aufweist und/oder die Größe des Wellenberg-Scherspaltes einen Wert zwischen 0,2mm bis 2,0mm, vorzugsweise zwischen 0,3mm bis 0,9mm, ganz besonders bevorzugt zwischen 0,4mm bis 0,8mm, aufweist.

Es ist erfindungsgemäss vorgesehen, dass eine oder mehrere Wellenberg-Scherflächen zumindest im Bereich einer Schersteg-Scherfläche auf der gleichen Höhe liegen wie die Oberfläche des Scherstegs.

Es kann auch vorgesehen sein, dass die Oberfläche des Scherstegs in Förderrichtung der Schmelze gesehen ein Profil aufweist, also nicht durchgängig die gleiche Höhe besitzt oder durchgängig eben mit einer positiven oder negativen Steigung ausgebildet ist. Das Profil kann insbesondere ein stufenförmiges oder ein wellenförmiges Profil sein. Vorzugsweise kann das Profil derart gestaltet sein, dass die Oberfläche des Scherstegs im Bereich eines Wellenbergs niedriger liegt als in den anderen Bereichen und dass im Bereich eines Wellentals die Oberfläche des Scherstegs vorzugsweise auf der gleichen Höhe liegt wie die Oberfläche des Sperrstegs. Damit kann erreicht werden, dass die Schmelze überwiegend nur im Bereich der Wellenberge eine Aufteilung erfolgt und Schmelze in diesem Bereich über den Schersteg in den benachbarten Wave-Schneckengang strömt. In den übrigen Bereichen wird ein Überströmen des Scherstegs eher verhindert. Insbesondere, wenn die Oberfläche des Scherstegs auf der gleichen Höhe wie die Oberfläche des Sperrstegs liegt, wird ein Überströmen in einen benachbarten Wave-Schneckengang vermieden.

Es ist erfindungsgemäss vorgesehen, dass die Größe des Schersteg-Scherspalts und/oder die Größe des Wellenberg-Scherspalts in Förderrichtung der Schmelze kleiner werden. Dabei kann die maximale Größe eines der vorgenannten Scherspalte im Bereich von 1mm bis 2mm liegen, vorzugsweise im Bereich von 1,2mm bis 1,6mm. Diese maximale Größe liegt in Förderrichtung der Schmelze gesehen am Anfang des erfindungsgemäßen Scherabschnitts vor. Die minimale Größe eines der vorgenannten Scherspalte kann im Bereich vom 0,2mm bis 0,8mm liegen, vorzugsweise im Bereich zwischen 0,3mm bis 0,4mm. Diese minimale Größe liegt in Förderrichtung der Schmelze gesehen am Ende des erfindungsgemäßen Scherabschnitts.

Es ist vorgesehen, dass sich die Wellenberg-Scherfläche auf der gleichen Höhe befindet wie die Oberfläche des Scherstegs in diesem Bereich. Derjenige Abschnitt der Oberfläche des Scherstegs, welcher im Bereich einer Wellenberg-Scherfläche liegt, stellt eine Schersteg-Scherfläche dar. Die Oberfläche des Scherstegs hat in diesem Bereich den gleichen konstanten Radius in Bezug auf die Längsachse der Schnecke wie die Oberfläche der Wellenberg-Scherfläche. Eine Wellenberg-Scherfläche und eine Schersteg-Scherfläche bilden zusammen eine Gesamt-Scherfläche. Eine bestimmte Gesamt-Scherfläche bildet mit der Innenwand des Zylinders einen Scherspalt gemäß einer für diese Gesamt-Scherfläche vorgegebenen Scherspalt-Größe. Im Ergebnis ergibt sich eine Ausbildung der Gesamt-Scherfläche als Plateau. Dies bedeutet, dass die Oberfläche des Wave-Schneckengangs und die Oberfläche des Scherstegs über die Länge Lw einer Wellenberg-Scherfläche den gleichen Radius in Bezug auf die Längsachse der Schnecke besitzen. In einer abgewickelten Ansicht bildet eine Gesamt-Scherfläche eine Ebene mit einem konstanten Radius in Bezug auf die Längsachse der Schnecke. Diese Ebene hat in Förderrichtung der Schmelze gesehen eine Länge entsprechend der Länge Lw der Wellenberg-Scherfläche. Die Breite dieser Ebene entspricht der Summe aus der Breite des Wave-Schneckengangs und der Breite des Scherstegs. Die Ebene kann vorzugsweise als Rechteck ausgebildet sein. Sie kann aber auch ganz oder teilweise als Parallelogramm ausgebildet sein. Insbesondere können die Schersteg-Scherfläche als Rechteck und die Wellenberg-Scherfläche als Parallelogramm ausgebildet sein oder umgekehrt.

Das vorstehend genannte Plateau bildet eine gekrümmte Ebene mit einem Radius entsprechend dem Radius des Ganggrunds des zugehörigen Wave-Schneckengangs in diesem Bereich. Diese Ebene hat in Förderrichtung der Schmelze eine Länge Lw und eine Breite entsprechend der Gangbreite des Wave-Schneckengangs. Die Ebene bildet vorzugsweise die Form eines Rechtsecks mit der Länge Lw und der Breite des entsprechenden Wave-Schneckengangs. Die Ebene kann in Draufsicht aber auch andere Formen aufweisen, beispielsweise könnte sie als Parallelogramm ausgebildet sein. Das vorstehend genannte Plateau liegt über eine gewisse Länge auf der gleichen Höhe wie die Oberfläche des Scherstegs. Damit steht eine Wellenberg-Scherfläche über eine gewisse Länge in Verbindung mit der Schersteg-Oberfläche, wobei beide Scherflächen auf eine Höhe liegen. Anders ausgedrückt liegen die Wellenberg-Scherfläche und die Schersteg-Scherfläche in einer gekrümmten Ebene mit einem gemeinsamen Radius und bilden zusammengenommen eine gemeinsame Gesamt-Scherfläche. Es kommt letztendlich lediglich darauf an, eine Wellenberg-Scherfläche geeigneter Größe zu haben, die mit einer Schersteg-Scherfläche geeigneter Größe zusammenwirken kann. Dabei kann die Ebene eines Wellenbergs über eine gewisse Länge in Verbindung mit der Oberfläche des Scherstegs stehen. Im Falle einer rechteckförmigen Ebene entspricht dies der vorgenannten Länge Lw. Im Falle eines Parallelogramms kann die an den Schersteg angrenzende Seite des Parallelogramms diese Länge Lw aufweisen.

Die Länge des Scherabschnitts der Schnecke hängt vom jeweiligen Anwendungsfall ab. Beispielsweise kommt es darauf an, ob die Schnecke als Schubschnecke für eine Spritzgießmaschine oder als Schnecke eines Einschnecken-Extruders verwendet werden soll. Ferner kommt es darauf an, welche Materialien mit der Schnecke verarbeitet werden sollen. Daher kann auch die gesamte Schnecke mit einem Scherabschnitt ausgebildet sein bzw. die Schnecke verfügt nur über einen einzigen Schneckenabschnitt, welcher als Scherabschnitt ausgebildet ist.

Bevorzugtes Anwendungsgebiet der Erfindung ist die Verarbeitung von Füllstoffen, deren räumliche Ausdehnung in einer Raumrichtung deutlich größer ist als in die anderen Raumrichtungen. Man kann solche Füllstoffe auch als längliche Füllstoffe bezeichnen. Als längliche Füllstoffe kommt insbesondere Fasermaterial in Betracht, beispielsweise als Schnittfasergranulat. In solchen Granulaten liegt das Fasermaterial in Faserbündeln vor, die es aufzulösen gilt und die in der Schmelze eine Umorientierung erfahren sollen.

Mit dem erfindungsgemäß gestalteten Scherabschnitt ist sichergestellt, dass ein beliebiges Agglomerat an Partikeln unabhängig vom Fließweg immer einen Mindestbetrag an Schergeschwindigkeit und Scherzeit erfährt (Scherdeformation), ohne einzelne Partikel signifikant mechanisch zu schädigen. Demzufolge wird auch ein Füllstoff, insbesondere ein Fasermaterial, welches mit der Plastifiziereinheit verarbeitet und mit Kunststoff vermischt wird, mechanisch lediglich minimal beschädigt.

Im Unterschied zu den eingangs genannten Wave-Schnecken ist erfindungsgemäß auf einem Wellenberg ein Plateau vorgesehen, wodurch die auf die Füllstoffpartikel, insbesondere Fasermaterial, ausgeübte Schergeschwindigkeit verringert und die Scherzeit verlängert wird. Der Eintrag an Scherdeformation n das Füllstoff- bzw Fasermaterial ist somit nicht überwiegend von der maximalen Schergeschwindigkeit abhängig. Dadurch wird ein besonders schonender dispersiver Mischvorgang erzeugt. Da auch der Schersteg eine Scherfläche bildet, wird der Eintrag an Scherenergie in diejenigen Partikel, welche über den Schersteg in den rückwärtigen Wave-Schneckengang ausweichen, auf einem identischen Niveau gehalten verglichen zu denjenigen Partikel, die das Plateau eines Wellenbergs durchfließen.

Je nach Breite des Sperrstegs kann der Schersteg eine deutlich größere Breite aufweisen als der Sperrsteg. Insbesondere kann die Breite des Scherstegs ein Mehrfaches der Breite des Sperrsteges aufweisen, vorzugsweise kann die Breite des Scherstegs das 2-fache bis zum 5-fachen der Breite des Sperrstegs aufweisen.

Ein zusätzlicher Aspekt betrifft Füllstoffe, deren räumliche Ausdehnung in einer Raumrichtung deutlich größer ist als in die anderen Raumrichtungen. Dabei handelt es sich in vielen Fällen um ein Fasermaterial, welches Faserbündel aufweist. Es kann sich aber auch um ein anderes Material handeln, wie zum Beispiel nadelförmige mineralische Füllstoffe oder plättchenförmige Pigmente. Zum Auflösen von Faserbündeln bzw. Agglomeraten an Fasern ist die Orientierung der Fasern im Bereich einer Scherfläche und damit in dem zwischen dieser Scherfläche und dem Zylinder gebildeten Scherspalt ausschlaggebend. Versuche haben gezeigt, dass Agglomerate mit quer zur Strömungsrichtung der Schmelze orientierten Fasern beim Durchströmen durch einen Scherspalt eine bessere Dispergierung zeigen als Agglomerate, bei welchen die Fasern parallel zur Strömungsrichtung liegend den Scherspalt durchströmen. Die zusätzliche Scherfläche auf dem Schersteg sorgt dafür, dass die Schmelze einerseits die Möglichkeit des Ausweichens in den rückwärtigen Wave-Schneckengang bekommt und so durch Strömungsmechanismen umorientiert wird, andererseits die Schmelze über das Plateau des Wellenbergs, welche eine Wellenberg-Scherfläche darstellt, fortfließen kann. Mit der erfindungsgemäßen Ausgestaltung mit zwei Scherflächen, nämlich einer Wellenberg-Scherfläche und einer Schersteg-Scherfläche, wird zudem erreicht, dass es genügend Faserbündel gibt, die quer zur jeweiligen Strömungsrichtung der Schmelze orientiert sind, wenn sie über eine Scherfläche bzw, durch einen Scherspalt strömen. Idealerweise sollte an jedem Wellenberg etwa eine Hälfte an Agglomeraten vorliegen, bei denen die Fasern so orientiert sind, dass sie quer zu Strömungsrichtung desjenigen Schmelzeanteils liegen, welcher über die Wellenberg-Scherfläche strömt, so dass die Fasern in dieser Orientierung den Wellenberg-Scherspalt durchströmen.. Das Vorstehende gilt analog für denjenigen Schmelzeanteil, welcher durch den an diesen Wellenberg angrenzenden Schersteg-Scherspalt über die Schersteg-Scherfläche in Richtung des benachbarten Waveschneckengangs strömt. Dies bedeutet, dass idealerweise auch in diesem Schmelzeanteil eine Hälfte an Agglomeraten vorliegt, bei denen die Fasern so orientiert sind, dass sie quer zur Strömungsrichtung dieses Schmelzeanteils liegen.

Gemäß einer Ausgestaltung der Erfindung kann der Schersteg eine größere Breite aufweisen als der Sperrsteg. Insbesondere kann die Breite des Scherstegs ein Mehrfaches der Breite des Sperrsteges aufweisen, vorzugsweise kann die Breite des Scherstegs das 2-fache bis zum 5-fachen der Breite des Sperrstegs aufweisen.

Gemäß der Erfindung, liegen in beiden Wave-Schneckengängen mehrere Gesamt-Scherflächen (SFn) vor und die Scherspalt-Größe $\Delta n$ (n=1, 2, 3...) wird in Förderrichtung der Schmelze kleiner werden bzw. nimmt ab. Mit dieser Maßnahme kann über die Schneckenlänge eine zunehmende Scherintensität erzeugt werden. Zusammen mit einer mehrmaligen Aufteilung des Schmelzestroms kann somit gewährleistet werden, dass auch Agglomerate mit Fasern, die an einer Scherfläche noch in Fließrichtung liegen, nach deren Umorientierung infolge der Aufteilung des Schmelzestroms an einer nachfolgenden Scherfläche aufgeschlossen werden, weil dann die Fasern quer zur Fließrichtung ausgerichtet sind.

Gemäß einer weiteren vorteilhaften Ausgestaltung kann im Bereich einer Gesamt-Scherfläche (SFn) die Breite des Scherstegs an seiner Oberfläche kleiner oder gleich groß sein wie die Länge Lw einer Wellenberg-Scherfläche in Förderrichtung der Schmelze gesehen, wobei die Breite vorzugsweise einen unteren Grenzwert zwischen 50% und 60% und einen oberen Grenzwert zwischen 80% und 90% der Länge Lw aufweist. Damit kann erreicht werden, dass eine gewisse Mindestmenge an Fasermaterial über die Scherfläche eines Scherstegs strömen kann. Weiterhin kann infolge der Ausrichtung der Fasern in einem Faserbündel quer zur Strömungsrichtung beim Überströmen dieser Scherfläche eine bessere Auflösung der Faserbündel erzielt werden.

Vorzugsweise sollte die Anordnung der Wellenberg-Scherflächen und die Länge Lw der Wellberg-Scherflächen derart sein, dass die Wellenberg-Scherflächen des einen Wave-Schneckengangs und die Wellenberg-Scherflächen des anderen Wave-Schneckengangs in Förderrichtung der Schmelze gesehen voneinander beabstandet sind, wobei vorzugsweise einer Wellenberg-Scherfläche in dem einen Wave-Schneckengang ein Wellental in dem anderen Wave-Schneckengang zugeordnet ist. Diese Ausgestaltung wirkt sich positiv auf das mehrmalige Aufteilen des Schmelzestroms aus.

Gemäß einer Weiterentwicklung kann vorgesehen sein, dass ein Wellenberg in Förderrichtung der Schmelze gesehen eine vor der Wellenberg-Scherfläche (SFw) liegende ansteigende Flanke und eine nach der Wellenberg-Scherfläche (SFw) liegende abfallende Flanke aufweist. Die ansteigende Flanke bildet mit der Oberfläche des Scherstegs einen ersten Winkel ($\alpha$), wobei die abfallende Flanke mit der Oberfläche des Scherstegs einen zweiten Winkel ($\beta$) bildet, und wobei der erste Winkel ($\alpha$) kleiner ist als der zweite Winkel ($\beta$). Somit wird in Strömungsrichtung der Schmelze gesehen vor einem Plateau eines Wellenbergs eine relativ flach ansteigende Flanke und nach diesem Plateau eine relativ stark abfallende Flanke ausgebildet. Dadurch ergibt sich der Vorteil, dass durch eine schlagartige Entspannung der viskoelastischen Schmelze ein Schwellverhalten der Schmelze zu beobachten ist. Die Schmelze wird durch Pressen durch einen Scherspalt deformiert. Am Scherspaltausgang entfällt die durch den Scherspalt aufgebrachte Spannung und die Polymermoleküle kehren in die thermodynamisch günstigere Form ungestörter Knäuel zurück. Die Schmelze dehnt sich entsprechend rechtwinklig zur Fließrichtung aus. Die sich in der Schmelze befindlichen unaufgelösten Feststoffpartikel erfahren eine rechtwinklig zur Fließrichtung orientierte Kraft, die ein Auflösen der Feststoffpartikel in der Schmelze ermöglicht.

Gemäß einer Ausgestaltung der Erfindung kann der Zylinder mit der mit einem Scherabschnitt ausgebildeten Schnecke einen ersten Zylinder darstellen und zusätzlich zu dem ersten Zylinder kann ein zweiter Zylinder mit einer zweiten Schnecke vorgesehen sein. Der zusätzliche, zweite Zylinder hat an seinem vorderen Ende einen Auslass, der in fluidischer Verbindung mit einem Einlass im hinteren Bereich des ersten Zylinders steht. Der zweite Zylinder ist für die Erzeugung eines aufgeschmolzenen Kunststoffmaterials (P) vorgesehen, wobei das aufgeschmolzene Kunststoffmaterial (P) von dem zweiten Zylinder in den ersten Zylinder übergeben werden kann. An dem ersten Zylinder ist ein Einlass für die Zugabe von Füllstoff, vorzugsweise Fasermaterial (F) vorgesehen, insbesondere für Schnittfasergranulat. Der Einlass für das aufgeschmolzene Kunststoffmaterial (P) und der Einlass für den Füllstoff bzw. das Fasermaterial (F) sind an dem ersten Zylinder in Förderrichtung der Schmelze gesehen vor dem Scherabschnitt (B) angeordnet.

Eine erfindungsgemäße Plastifiziereinheit kann bei einer Spritzgießmaschine verwendet werden. Eine solche Spritzgießmaschine umfasst eine Schließeinheit und eine Plastifizier- und Einspritzeinheit, wobei die Plastifizier- und Einspritzeinheit dieser Spritzgießmaschine eine erfindungsgemäße Plastifiziereinheit aufweist, und wobei die Schnecke mit einem Dreh- und einem Linearantrieb wirkverbunden ist. Eine erfindungsgemäße Plastifiziereinheit kann auch bei einer Extrusionsanlage verwendet werden. Eine solche Extrusionsanlage umfasst eine Plastifiziereinheit, wobei dem Zylinder in Förderrichtung der Schmelze gesehen ein Extrusionswerkzeug und gegebenenfalls weitere Anlagenteile einer Extrusionsanlage nachgeschaltet sind, wobei es sich um Anlagenteile gemäß eines herzustellenden Extrusionserzeugnisses handelt.

Nachfolgend soll die Erfindung anhand von Ausführungsbeispielen und unter Bezugnahme auf die Figuren 1 bis 11 näher beschrieben werden. Es zeigen:

Fig.1      Schematische Darstellung einer Plastifiziereinheit

Fig.2      Ausschnitts des Scherabschnitts B der Schnecke aus Figur 1

Fig.3      Perspektivische Darstellung eines abgewickelten Abschnitts des Scherabschnitts B der Schnecke aus Figur 1

Fig.4      Schnitt V-V in Figur 3

Fig.5      Schnitt X-X in Figur 3

Fig.6      Schnitt Y-Y in Figur 3

Fig.7      Schnitt Z-Z in Figur 3

Fig.8      Verlauf der Größe des Scherspalts SP

Fig.9      Spritzgießmaschine mit erster Ausführungsform einer erfindungsgemäßen Plastifizier- und Einspritzeinheit

Fig. 10     Spritzgießmaschine mit einer zweiten Ausführungsform einer erfindungsgemäßen Plastifizier- und Einspritzeinheit

Fig.11     weitere Ausführungsform einer erfindungsgemäßen Plastifizierzeinheit

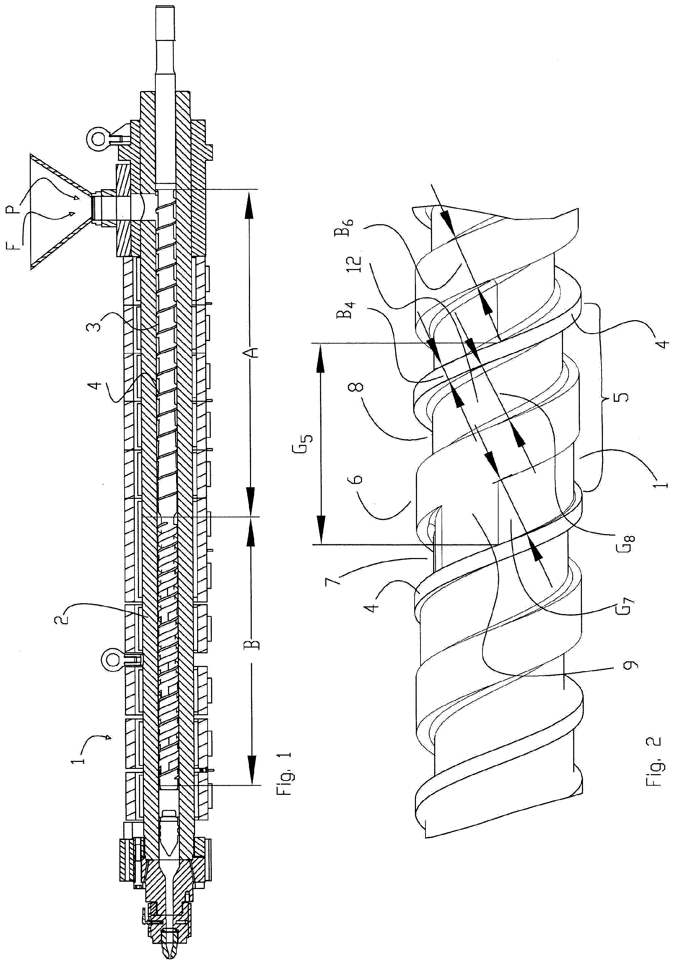

Bei den nachfolgenden Ausführungen soll als Füllstoff ein Fasermaterial zum Einsatz kommen. Die Figur 1 zeigt in schematischer Darstellung eine insgesamt mit dem Bezugszeichen 1 gekennzeichnete Plastifiziereinheit 1, umfassend einen Zylinder 2 und eine Schnecke 3 mit einem schraubförmig umlaufenden Schneckensteg 4. Wenn die Plastifiziereinheit 1 als Bestandteil einer Spritzgießmaschine ausgeführt sein soll, ist die Schnecke 3 als Schubschnecke ausgebildet und kann mittels einer geeigneten Antriebseinheit gedreht und in Längsrichtung verfahren werden. Wenn die Plastifiziereinheit 1 als Bestandteil einer Extrusionsmaschine ausgeführt sein soll, ist lediglich ein Drehantrieb für die Schnecke 3 erforderlich.

Die Schnecke 3 verfügt über mehrere Abschnitte A und B. In einem ersten Abschnitt A wird ein Kunststoffmaterial P, welches über einen Einfülltrichter eingegeben wird, eingezogen und aufgeschmolzen. Über diesen Einfülltrichter wird auch ein Fasermaterial F hinzugegeben. Der Abschnitt A ist nach Art einer Dreizonenschnecke ausgeführt und verfügt somit über eine Einzugszone, eine Kompressionszone und eine Meteringzone. In Förderrichtung der Schmelze gesehen schließt sich ein erfindungsgemäßer Scherabschnitt B an. Zu Beginn des Abschnitts B liegt ein Gemisch aus aufgeschmolzenem Kunststoffmaterial P und Fasermaterial F vor. Kunststoffmaterial P und Fasermaterial F können wie in der Figur 1 über ein- und denselben Einfülltrichter in den Zylinder 2 eingegeben werden. Das Fasermaterial F kann jedoch auch in Förderrichtung gesehen nach dem Kunststoffmaterial P hinzugefügt werden. Das Gemisch aus aufgeschmolzenem Kunststoffmaterial P und Fasermaterial F wird durch Rotation der Schnecke 3 durch den Abschnitt B gefördert. Der Abschnitt B ist erfindungsgemäß als Scherabschnitt B ausgebildet, wie weiter unten noch näher erläutert wird. Am Ende des Abschnitts B liegt ein Gemisch aus Schmelze an Kunststoffmaterial P und darin verteiltem Fasermaterial F vor, wobei das Fasermaterial F aufgrund der Wirkung im Abschnitt B in der Weise aufgelöst worden ist, dass die einzelnen Filamente des Fasermaterials F weitgehend homogen in dem Gemisch verteilt vorliegen. Eine Schnecke mit einem erfindungsgemäß gestalteten Scherabschnitt kann vorliegend auch als Scherenergieschnecke bezeichnet werden.

Nachfolgend soll anhand der Figuren 2 bis 7 die Ausgestaltung des Scherabschnitts B näher beschrieben werden.

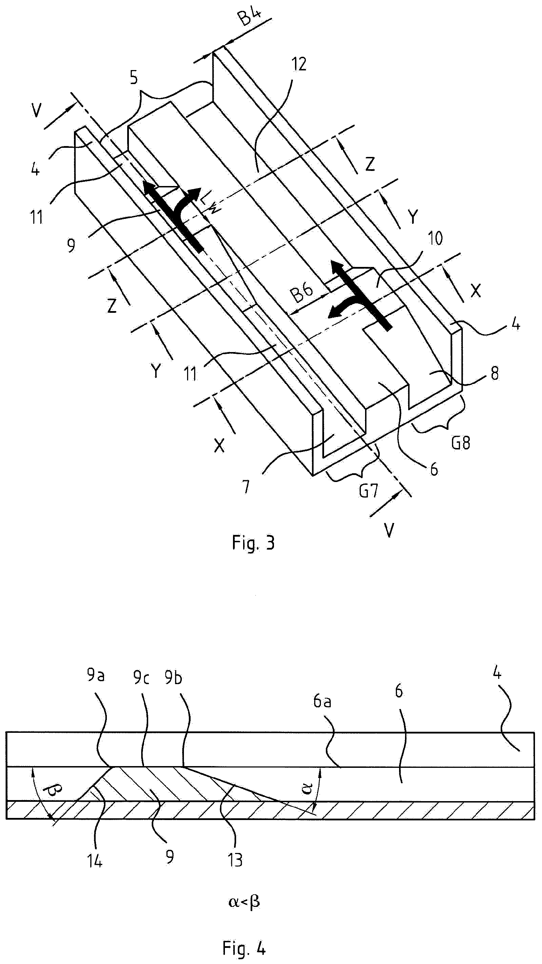

Die Figur 2 zeigt einen Ausschnitt aus einer Schnecke 3 mit erfindungsgemäß gestaltetem Scherabschnitt B und die Figur 3 zeigt eine perspektivische Darstellung eines abgewickelten Teilabschnitts des Scherabschnitts B der Schnecke 2. Der Schneckensteg 4 ist als Sperrsteg ausgebildet, d.h. er bildet mit der Zylinderinnenwand einen Sperrspalt SP. Die Größe des Sperrspalts SP ist so bemessen, dass keine oder nur wenig Schmelze durch diesen Sperrspalt SP hindurchströmen kann. Die Größe dieses Spalts entspricht dem halben Schneckenspiel in dem Zylinder 2. Der umlaufende Sperrsteg 4 bildet einen Haupt-Schneckengang 5 der Gangbreite $G_5$. In dem Haupt-Schneckengang 5 ist ein weiterer Steg als Schersteg 6 vorgesehen und so in dem Haupt-Schneckengang 5 angeordnet, dass zwei Schneckengänge 7 und 8 zu beiden Seiten des Scherstegs 6 vorliegen. Wie weiter unten noch näher ausgeführt wird, sind die beiden Schneckengänge 7 und 8 mit einem in Förderrichtung der Schmelze gesehen wellenförmig gestalteten Ganggrund ausgebildet, d.h. nach Art einer sogenannten Wellen-Schnecke oder - englisch - Wave-Schnecke. Daher sollen diese Schneckengänge vorliegend auch als Wellen-Schneckengänge oder Wave-Schneckengänge 7 und 8 bezeichnet werden. Die Gangbreiten $G_7$ und $G_8$ der Wave-Schneckengänge 7 und 8 sind gleich groß. Der Verlauf der Wave-Schneckengänge 7 und 8 ist derart, dass ein Wellenberg 9 in dem Wave-Schneckengang 7 und ein Wellental 12 in dem Wave-Schneckengang 8 an einer Position zu beiden Seiten des Scherstegs 6 oder über einen Abschnitt zu beiden Seiten des Scherstegs 6 zusammen vorkommen. Ebenso ist vorgesehen, dass ein Wellenberg 10 in dem Wave-Schneckengang 8 und ein Wellental 11 in dem Wave-Schneckengang 7 an einer Position zu beiden Seiten des Scherstegs 6 oder über einen Abschnitt zu beiden Seiten des Scherstegs 6 zusammen vorkommen. Dieser Verlauf der Wave-Schneckengänge 7 und 8 ist analog zu dem Prinzip wie es bei den sogenannten Doppelwellen-Schnecken aus dem eingangs genannten Stand der Technik (US 4,285,600 und US 4,356,140) bekannt ist.

Erfindungsgemäß ist zum einen die Breite $B_6$ des Scherstegs 6 deutlich größer als die Breite $B_4$ des Sperrstegs 4. Ferner ist die Höhe der Wellenberge 9, 10 derart bemessen, dass es in jedem Wave-Schneckengang 7, 8 einen Abschnitt gibt, in welchem die Oberfläche des Scherstegs 6 und die Oberfläche eines Wellenbergs eine gemeinsame Oberfläche bilden. Zudem sind die Wellenberge mit einem Plateau ausgebildet, d.h. es gibt eine Fläche eines Wellenbergs, welche in Förderrichtung der Schmelze eine Länge Lw aufweist und deren Breite der Gangbreite $G_7$, $G_8$ eines Wave-Schneckengangs 7, 8 entspricht. Die vorgenannte gemeinsame Oberfläche von Schersteg 6 und Wellenberg 9, 10 liegt somit über die gesamte Länge Lw der Fläche eines Wellenbergs 9, 10 vor. Die Breite der gemeinsamen Oberfläche entspricht der Summe aus der Breite $B_6$ des Scherstegs 6 und der Gangbreite $G_7$, $G_8$ des jeweils an der gemeinsamen Oberfläche beteiligten Wellenbergs 9, 10.

Die Funktion der vorgenannten gemeinsamen Oberfläche besteht darin, eine Scherwirkung auf das in einem Wave-Schneckengang sich befindliche und einen Wellenberg hinaufströmende Gemisch aus Kunststoffmaterial P und Fasermaterial F auszuüben und dieses Gemisch in der Weise strömungsgemäß aufzuteilen, dass ein Teil über das Plateau des Wellenbergs weiterströmt und in dem Wave-Schneckengang verbleibt, in welchem das Gemisch angekommen ist, und dass ein anderer Teil über den Schersteg hinweg in den benachbarten Wave-Schneckengang strömt. Daher soll die gemeinsame Oberfläche nachfolgend auch als Gesamt-Scherfläche SF bezeichnet werden. Diese Gesamt-Scherfläche SF setzt sich somit zusammen aus einer Scherfläche SFw entsprechend der Fläche des Plateaus eines Wellenbergs 9, 10 und einer Scherfläche SFs eines Scherstegs 6, welche dem Produkt aus der Länge Lw der Scherfläche SFw und der Breite $B_6$ des Scherstegs 6 entspricht, d.h. SFs = Lw x $B_6$.

Je nachdem, ob die Scherfläche SFw bei einem Wellenberg 9 im Wave-Schneckengang 7 oder bei einem Wellenberg 10 im Wave-Schneckengang 8 vorliegt, können folgende Scherflächen unterschieden werden.

$$SF_{W7} = L_W \times G_7 \quad \text{(Scherfläche bei Wellenberg in Wave-Schneckengang 7)}$$

$$SF_{W8} = L_W \times G_8 \quad \text{(Scherfläche bei Wellenberg in Wave-Schneckengang 8)}$$

Die Ausgestaltung der Wave-Schneckengänge 7 und 8 und des Scherstegs 6 ist derart, dass die Breite $B_6$ des Scherstegs 6 kleiner oder gleich ist wie die Länge Lw einer Scherfläche SFw bei einem Wellenberg. In einer bevorzugten Ausführungsform kann die Breite $B_6$ einen Wert von 50% von Lw und größer annehmen. Ganz besonders bevorzugt liegt die untere Grenze von $B_6$ zwischen 50% und 60% von Lw und die obere Grenze von $B_6$ zwischen 80% und 90% von Lw. Geeignete Zahlenwerte richten sich danach, welches Kunststoffmaterial P und welches Fasermaterial F verarbeitet werden soll. Das Verhältnis von Breite $B_6$ zu Länge Lw sollte so sein, dass sich für das zu verarbeitende Material im Bereich einer Gesamt-Scherfläche SF eine Aufteilung des Materialstroms ergibt, wonach wenigstens die Hälfte des ankommenden Materials über den Schersteg 6 in den benachbarten Wave-Schneckengang strömt.

In Strömungsrichtung gesehen sollten in jedem der Wave-Schneckengänge 7, 8 mehrere Wellenberge 9 bzw. 10 aufeinander folgen. Eine Anordnung mit zwei bis fünf aufeinanderfolgenden Wellenbergen kann für die meisten Anwendungen als ausreichend angesehen werden. Es kann aber auch vorkommen, dass eine größere Anzahl an Wellenbergen erforderlich ist.

Die Figur 3 zeigt eine perspektivische Darstellung eines abgewickelten Teilabschnitts des Scherabschnitts B der Schnecke 2. Dort ist zu erkennen, wie ein Wellenberg in dem einen Wave-Schneckengang und ein Wellental in dem anderen Wave-Schneckengang nebeneinander liegen. Die Längen der Lw bei den Plateaus der Wellenberge ist so bemessen, dass die Scherflächen $SF_{W7}$ der Wellenberge 9 in dem Wave-Schneckengang 7 und die Scherflächen SFws der Wellenberge 10 in dem Wave-Schneckengang 8 einen ausreichenden Abstand voneinander aufweisen. Aufgrund des Versatzes der Scherflächen ergibt sich eine Teilströmung von einem Wave-Schneckengang in den anderen und zurück und zwar stets über die Scherfläche SFs des Scherstegs 6, die mit der jeweiligen Scherfläche eines Wellenbergs eine gemeinsame Oberfläche bzw. Gesamt-Scherfläche SF bildet.

Die Länge Lw einer Wellenberg-Scherfläche ist in Förderrichtung der Schmelze gesehen vergleichsweise lang ausgebildet, insbesondere im Vergleich zur Breite des Sperrstegs und/oder die Breite des Scherstegs ist zumindest abschnittsweise vergleichsweise breit ausgebildet, insbesondere im Vergleich zur Breite des Sperrstegs und zwar vorzugsweise in den als Schersteg-Scherfläche ausgebildeten Abschnitten der Oberfläche des Scherstegs.

Gemäß einer Ausführungsform kann vorgesehen sein, dass in Bezug auf den Schneckendurchmesser D die Länge Lw einer Wellenberg-Scherfläche in Förderrichtung der Schmelze gesehen ein Maß von mindestens 0,15xD, vorzugsweise größer oder gleich 0,20xD, ganz besonders bevorzugt größer oder gleich 0,30xD aufweist. Zusätzlich oder alternativ dazu kann vorgesehen sein, dass die Breite des Scherstegs zumindest abschnittsweise ein Maß von mindestens 0,15xD, vorzugsweise größer oder gleich 0,20xD, ganz besonders bevorzugt größer oder gleich 0,30xD aufweist. Die Breite des Scherstegs kann vorzugsweise in den als Schersteg-Scherfläche (SFs) ausgebildeten Abschnitten der Oberfläche des Scherstegs das vorgenannte Maß aufweisen.

Die Figur 4 zeigt einen Schnitt entlang der Linie V-V in der Figur 3 und zwar in einer Ansicht aus Richtung des Pfeils auf die Linie V-V in der Figur 3. Demzufolge ist im Wave-Schneckengang 7 der Ganggrund in Strömungsrichtung (von rechts nach links in der Figur 4) ansteigend ausgebildet und schließt mit einem Winkel $\alpha$ an die Oberfläche 6a des Scherstegs 6 an. Dies ist der Anfang 9a des Plateaus des Wellenbergs 9. Von dort verläuft die Oberfläche 9c des Wellenbergs 9 über eine Länge Lw auf der gleichen Höhe wie die Oberfläche 6a des Scherstegs 6. Ab dem Ende 9b des Plateaus des Wellenbergs 9 fällt der Wellenberg 9 mit einem Winkel $\beta$ in Richtung des Ganggrunds des Wave-Schneckengangs 7 ab, bis die Talsohle des Wave-Schneckengangs 7 erreicht ist, welche in der Figur 3 mit dem Bezugszeichen 11 bezeichnet ist. In Blickrichtung hinter dem Schersteg 6 ist der über den Schersteg 6 hinausragende Teil des Sperrstegs 4 zu erkennen. Die Wellenberge sind in der Weise ausgestaltet, dass sich eine langsam ansteigende Flanke 13 und eine steil abfallende Flanke 14 ergeben, d.h. $\alpha < \beta$.

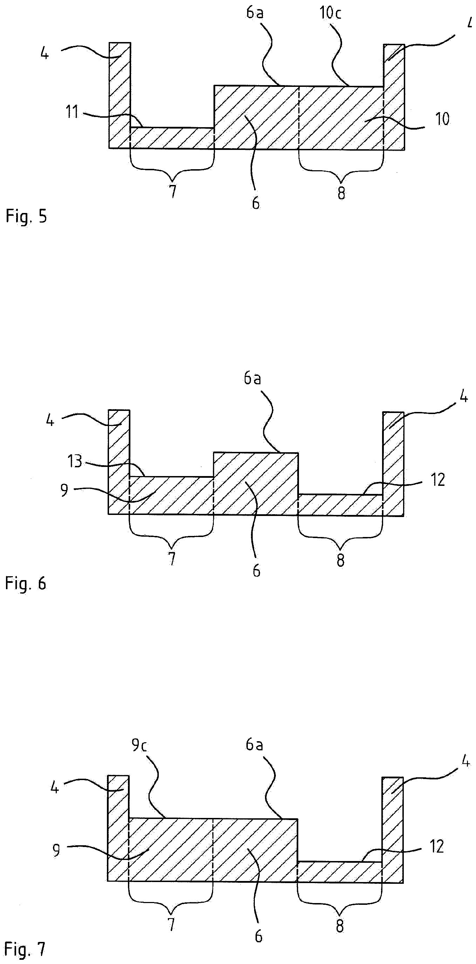

In den Figuren 5, 6 und 7 sind weitere Schnitte aus der Figur 3 dargestellt, die so gewählt sind, dass sie in Strömungsrichtung der Schmelze gesehen hintereinander liegen.

Die Figur 5 zeigt einen Schnitt entlang der Linie X-X in der Figur 3, wo zu erkennen ist, dass in dem Wave-Schneckengang 8 das Plateau des Wellenbergs 10 mit seiner Oberfläche 10c vorliegt und der Ganggrund des Wave-Schneckengangs 8 somit auf der gleichen Höhe liegt wie die Oberfläche 6a des Scherstegs 6. In dem Wave-Schneckengang 7 liegt hingegen ein Wellental 11 vor, d.h. der Ganggrund in dem Wave-Schneckengang 7 hat an dieser Stelle sein niedrigstes Niveau. Die gestrichelten Linien markieren die Verbindungsstellen zwischen Sperrsteg 4, Wave-Schneckengängen 7, 8 und Schersteg 6.

Die Figur 6 zeigt einen Schnitt entlang der Linie Y-Y in der Figur 3, wo zu erkennen ist, dass an dieser Stelle der Schnecke in beiden Wave-Schneckengängen 7 und 8 der jeweilige Ganggrund eine Höhe aufweist, welche unterhalb der Oberfläche 6a des Scherstegs 6 liegt. Der Ganggrund in dem Wave-Schneckengang 7 liegt etwas höher als der Ganggrund in dem Wave-Schneckengang 8, weil in dem Wave-Schneckengang 7 die Line Y-Y die ansteigende Fläche 13 des Wellenbergs 9 schneidet und in dem Wave-Schneckengang 8 dort ein Wellental 12 vorliegt.

Die Figur 7 zeigt einen Schnitt entlang der Linie Z-Z in der Figur 3, wo zu erkennen ist, dass in dem Wave-Schneckengang 7 das Plateau des Wellenbergs 9 mit seiner Oberfläche 9c vorliegt und der Ganggrund des Wave-Schneckengangs 7 somit auf der gleichen Höhe liegt wie die Oberfläche 6a des Scherstegs 6. In dem Wave-Schneckengang 8 liegt hingegen ein Wellental 12 vor, d.h. der Ganggrund in dem Wave-Schneckengang 8 hat an dieser Stelle sein niedrigstes Niveau.

Die Oberfläche des Scherstegs bildet mit der Innenwand des Zylinders einen Schersteg-Scherspalt und die Oberfläche einer Wellenberg-Scherfläche bildet mit der Innenwand des Zylinders einen Wellenberg-Scherspalt. Gemäß einer Ausgestaltung der Erfindung kann die Größe des Schersteg-Scherspaltes zumindest im Bereich einer Schersteg-Scherfläche einen Wert zwischen 0,1mm bis 1,2mm aufweisen und/oder die Größe des Wellenberg-Scherspaltes kann einen Wert zwischen 0,1mm bis 1,2mm aufweisen. Je nachdem, welcher Scherspalt (Schersteg-Scherspalt / Wellenberg-Scherspalt) welchen Wert aufweist, können unterschiedliche Fallkonstellationen vorliegen. Somit können eine oder mehrere Wellenberg-Scherflächen zumindest im Bereich einer Schersteg-Scherfläche auf der gleichen Höhe liegen wie die Oberfläche des Scherstegs (siehe Figuren 3, 5 und 7) und/oder eine oder mehrere Wellenberg-Scherflächen können zumindest im Bereich einer Schersteg-Scherfläche niedriger liegen wie die Oberfläche des Scherstegs und/oder eine oder mehrere Wellenberg-Scherflächen können zumindest im Bereich einer Schersteg-Scherfläche höher liegen wie die Oberfläche des Scherstegs. Ferner können die Größe des Schersteg-Scherspalts und/oder die Größe des Wellenberg-Scherspalts in Förderrichtung der Schmelze kleiner werden.

Zwischen einer Gesamt-Scherfläche SF und der Innenwand des Zylinders 2 liegt ein Spalt SZ vor, welcher nachfolgend auch als Scherspalt SZ bezeichnet werden soll. Die Größe dieses Scherspalts SZ bei einer bestimmten Scherfläche SFn (n = 1, 2,....) soll nachfolgend mit $\Delta$n (n = 1, 2, 3,...) bezeichnet werden. Die Schnecke 2 ist in der Weise ausgestaltet, dass der Scherspalt SZ in Strömungsrichtung gesehen kleiner wird, d.h. $\Delta 1 > \Delta 2 > \Delta 3$ und so fort. Damit wird folgender Effekt erzielt: Durch die Verringerung des Scherspaltes SZ wird eine Erhöhung der Scherdeformation erzeugt welche zu einer Verbesserung der dispersiven und distributiven Mischwirkung führt mit dem Ziel die über die Prozesslänge kleiner werdenden Agglomerate weiter aufzulösen.

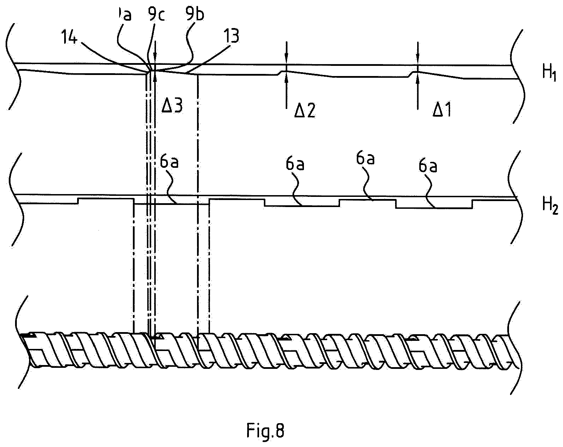

In der Figur 8 ist eine Ausführungsform dargestellt, in welcher die Oberfläche 6a des Scherstegs 6 in Förderrichtung der Schmelze gesehen mit einem Profil ausgebildet ist, also nicht durchgängig die gleiche Höhe besitzt wie in den Figuren 3 bis 7. Das Profil kann insbesondere ein stufenförmiges oder ein wellenförmiges Profil sein. Vorzugsweise ist das Profil derart gestaltet ist, dass die Oberfläche 6a des Scherstegs 6 im Bereich eines Wellenbergs 9, 10 niedriger liegt als in den anderen Bereichen und dass im Bereich eines Wellentals die Oberfläche 6a des Scherstegs 6 vorzugsweise auf der gleichen Höhe liegt wie die Oberfläche des Sperrstegs 4. Ein solches Profil ist - als Stufenprofil - in der Figur 8 dargestellt.

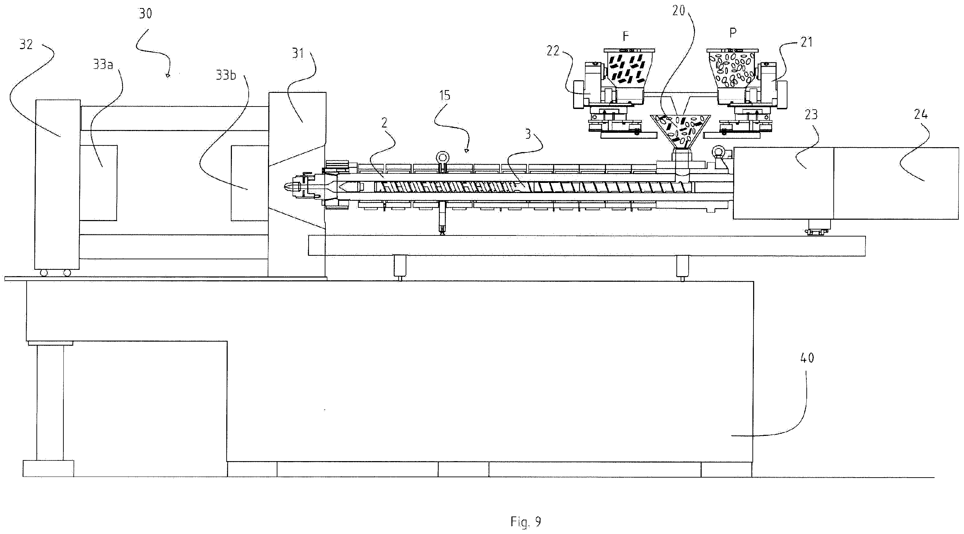

Die Figur 9 zeigt ein Ausführungsbeispiel einer Spritzgießmaschine mit einer Plastifizier- und Einspritzeinheit 15 sowie einer Schließeinheit 30, die beide auf einem Maschinenbett 40 abgestützt sind. Das Kunststoffmaterial P und das Fasermaterial F werden zusammen über einen Einfülltrichter 20 in den Zylinder 2 eingegeben wird. Dabei kann eine fertige Vormischung verwendet werden oder - wie dargestellt - das Kunststoffmaterial P und das Fasermaterial F werden über getrennte Dosiervorrichtungen dem Einfülltrichter 20 zugeführt, nämlich eine Fasermaterialdosiervorrichtung 21 und eine Kunststoffmaterialdosiervorrichtung 22. Die Schnecke 3 ist als Schubschnecke ausgebildet, d.h. sie ist mit ihrem hinteren Ende mit einem Drehantrieb 23 und einem Linearantrieb 24 wirkverbunden. Die Schließeinheit 30 kann gemäß bekannter Bauart sein und ist daher nur schematisch dargestellt. Sie umfasst im Wesentlichen eine feststehende Formaufspannplatte 31 und eine dieser gegenüber verfahrbare, bewegliche Formaufspannplatte 32. Des Weiteren sind eine bewegliche Formhälfte 33a und eine feststehende Formhälfte 33b eines Spritzgießwerkzeugs vorgesehen, die in geschlossenem Zustand eine oder mehrere Kavitäten ausbilden. Wenn die Plastifizier- und Einspritzeinheit 15 an die feststehende Formhälfte 33b angedockt ist, kann in bekannter Weise ein Gemisch aus Kunststoffmaterial P und Fasermaterial F in die Kavität eingespritzt werden.

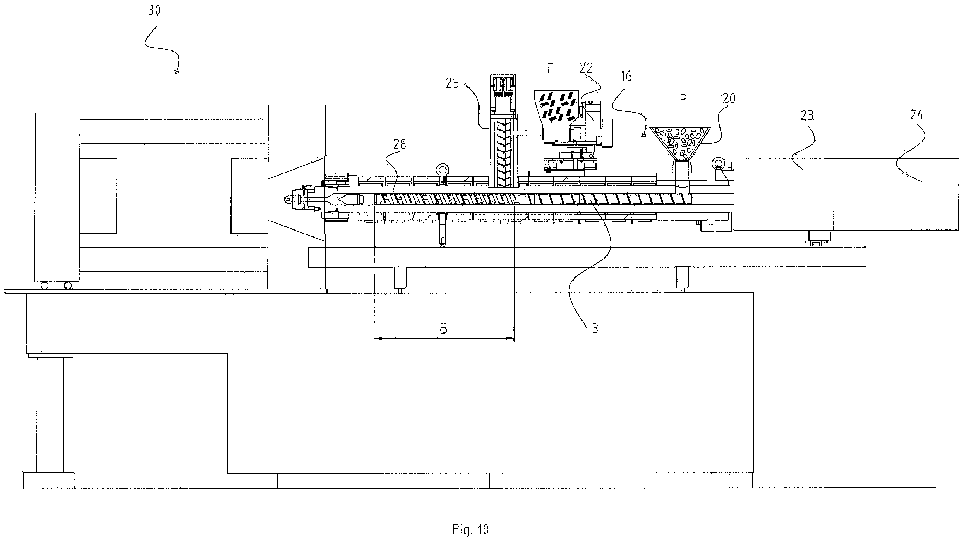

Die Figur 10 zeigt ein Ausführungsbeispiel einer Spritzgießmaschine mit einer Plastifizier- und Einspritzeinheit 16 sowie einer Schließeinheit 30, die beide auf einem Maschinenbett 40 abgestützt sind. Im Unterschied zu der Plastifizier- und Einspritzeinheit 15 aus der Figur 9 werden vorliegend das Kunststoffmaterial P und das Fasermaterial F separat in den Zylinder 2 eingegeben. Das Kunststoffmaterial P wird über einen ersten Einfülltrichter 20 am hinteren Ende der Plastifizier- und Einspritzeinheit 16 in den Zylinder 2 eingegeben. In Förderrichtung der Schmelze gesehen stromabwärts, aber vor Beginn des Scherabschnitts B, wird das Fasermaterial F in den Zylinder 2 eingegeben. Das Fasermaterial F wird über eine Fasermaterialdosiervorrichtung 22 einem Schneckenförderer 25 zugeführt, der horizontal oder vertikal an den Zylinder 2 angeflanscht ist.

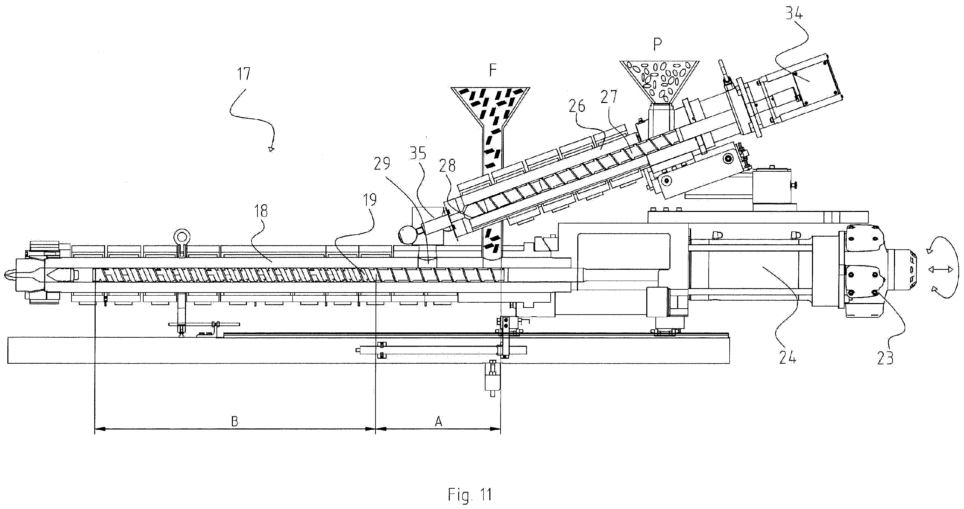

Die Figur 11 zeigt eine Variante für eine räumliche Trennung für die Zugabe des Kunststoffmaterials P und die Zugabe des Fasermaterials F. Dieser Aufbau ermöglicht die Trennung des Plastifiziervorgangs vom Homogenisierungsvorgang des Fasermaterials und begünstigt damit die mechanische Beanspruchung des letzteren. Die hier dargestellte Plastifizier- und Einspritzeinheit 17 dritter Bauart umfasst einen ersten Zylinder 18 mit einer Schnecke 19 und einen zweiten Zylinder 26 mit einer zweiten Schnecke 27. Der Zylinder 18 enthält die mit einem Scherabschnitt B ausgebildete Schnecke 19. Der zusätzliche, zweite Zylinder 26 hat an seinem vorderen Ende einen Schmelze-Auslass 28, der in fluidischer Verbindung mit einem Schmelze-Einlass 29 im hinteren Bereich des ersten Zylinders 18 steht, beispielsweise über eine Rohrleitung 35. Für die zweite Schnecke 27 ist lediglich ein Drehantrieb 34 vorgesehen. Die erste Schnecke 19 kann wie oben beschrieben mit einem Drehantrieb 23 und einem Linearantrieb 24 in Wirkverbindung stehen, so dass eine Dreh- und eine Linearbewegung der Schnecke 19 möglich sind, wie dies mit den Pfeilen am hinteren Ende der Schnecke 19 veranschaulicht ist. Der zweite Zylinder 26 ist für die Erzeugung eines aufgeschmolzenen Kunststoffmaterials (P) vorgesehen, wobei das aufgeschmolzene Kunststoffmaterial (P) von dem zweiten Zylinder 26 in den ersten Zylinder 18 übergeben wird. An dem ersten Zylinder 18 ist ein Einlass für die Zugabe von Fasermaterial (F) vorgesehen, insbesondere für Schnittfasergranulat. Der Einlass für das aufgeschmolzene Kunststoffmaterial (P) und der Einlass für das Fasermaterial (F) sind an dem ersten Zylinder 18 in Förderrichtung der Schmelze gesehen vor dem Beginn des Scherabschnitts B angeordnet.

**Bezugszeichenliste**

| | |
|---|---|
| 1 | Plastifiziereinheit |
| 2 | Zylinder |
| 3 | Schnecke |
| 4 | Sperrsteg |
| 5 | Haupt-Schneckengang |
| 6 | Schersteg |
| 6a | Oberfläche des Scherstegs 6 |
| 7 | Erster Wave-Schneckengang |
| 8 | Zweiter Wave-Schneckengang |
| 9 | Wellenberg im Wave-Schneckengang 7 |
| 9a | Beginn der Scherfläche des Wellenbergs 9 |
| 9b | Ende der Scherfläche des Wellenbergs 9 |
| 9c | Oberfläche des Wellenbergs 9 (Scherfläche) |
| 10 | Wellenberg im Wave-Schneckengang 8 |
| 10c | Oberfläche des Wellenbergs 10 |
| 11 | Wellental im Wave-Schneckengang 7 |
| 12 | Wellental im Wave-Schneckengang 8 |
| 13 | Ansteigende Flanke |
| 14 | Abfallende Flanke |
| 15 | Plastifizier und Einspritzeinheit erster Bauart |
| 16 | Plastifizier- und Einspritzeinheit zweiter Bauart |
| 17 | Plastifizier- und Einspritzeinheit dritter Bauart |
| 18 | Erster Zylinder der Plastifizier- und Einspritzeinheit 17 |
| 19 | Erste Schnecke der Plastifizier- und Einspritzeinheit 17 |
| 20 | Einfülltrichter |
| 21 | Kunststoffmaterialdosiervorrichtung |
| 22 | Fasermaterialdosiervorrichtung |
| 23 | Drehantrieb |
| 24 | Linearantrieb |
| 25 | Schneckenförderer |
| 26 | Zweiter Zylinder der Plastifizier- und Einspritzeinheit 17 |
| 27 | Zweite Schnecke der Plastifizier- und Einspritzeinheit 17 |
| 28 | Schmelze-Auslass |
| 29 | Schmelze-Einlass |
| 30 | Schließeinheit |
| 31 | Feststehende Formaufspannplatte |
| 32 | Bewegliche Formaufspannplatte |

| | |
|---|---|
| 33a | Bewegliche Formhälfte |
| 33b | Feststehende Formhälfte |
| 34 | Drehantrieb für zweite Schnecke 27 |
| 35 | Rohrleitung |
| 40 | Maschinenbett |
| A | Erster Schneckenabschnitt |
| B | Zweiter Schneckenabschnitt |
| C | Dritter Schneckenabschnitt |
| P | Kunststoffmaterial |
| F | Fasermaterial |
| $G_5$ | Gangbreite des Haupt-Schneckengangs 5 |
| $G_7$ | Gangbreite des Wave-Schneckengangs 7 |
| $G_8$ | Gangbreite des Wave-Schneckengangs 8 |
| $B_4$ | Stegbreite des Sperrstegs 4 |
| $B_6$ | Stegbreite des Scherstegs 6 |
| $L_W$ | Länge des Plateaus eines Wellenbergs 9, 10 |
| SF | Scherfläche |
| SFs | Scherfläche des Scherstegs 6 |
| SFw | Scherfläche eines Wellenbergs 9, 10 |
| $SF_{W7}$ | Scherfläche eines Wellenbergs im Wave-Schneckengang 7 |
| $SF_{W8}$ | Scherfläche eines Wellenbergs im Wave-Schneckengang 8 |
| Δ | Spaltgröße zwischen Scherfläche und Zylinderinnenwand |
| SP | Spalt zwischen Sperrsteg und Zylinderinnenwand |
| SZ | Spalt zwischen Scherfläche und Zylinderinnenwand |
| α | Winkel zwischen ansteigender Flanke und Oberfläche des Scherstegs |
| β | Winkel zwischen abfallender Flanke und Oberfläche des Scherstegs |

**Patentansprüche**

1. Plastifiziereinheit (1) für eine Kunststoff verarbeitende Maschine, insbesondere für eine Spritzgießmaschine oder eine Extrusionsanlage, umfassend einen Zylinder (2) und eine darin drehbar gelagerte Schnecke (3), wobei die Schnecke (3) einen als Scherabschnitt (B) ausgebildeten Schneckenabschnitt aufweist, wobei in dem Scherabschnitt (B) die Schnecke (3) einen schraubenförmig um den Schneckenkern umlaufenden Sperrsteg (4) und einen von dem Sperrsteg (4) eingeschlossenen Haupt-Schneckengang (5) aufweist, wobei in dem Haupt-Schneckengang (5) ein vorzugsweise parallel zu dem Sperrsteg (4) verlaufender Schersteg (6) angeordnet ist, wobei der Schersteg (6) zumindest abschnittsweise eine geringere Höhe aufweist als der Sperrsteg (4) und in diesen Abschnitten die Oberfläche (6a) des Scherstegs (6) eine Schersteg-Scherfläche ($SF_S$) bildet, wobei in dem Haupt-Schneckengang (5) zwei parallel verlaufende und durch den Schersteg (6) voneinander beabstandete Wave-Schneckengänge (7, 8) vorgesehen sind, wobei jeder dieser Wave-Schneckengänge (7, 8) einen in Förderrichtung der Schmelze wellenförmig verlaufenden Ganggrund (15, 16) aufweist, wobei die Wellenberge (9) des einen Wave-Schneckengangs (7) in Förderrichtung der Schmelze gesehen versetzt zu den Wellenbergen (10) des anderen Wave-Schneckengangs (8) liegen, wobei in jedem Wave-Schneckengang (7, 8) ein oder mehrere Wellenberge (9, 10) mit einer als Plateau ausgebildeten und eine Wellenberg-Scherfläche ($SF_W$) bildende Oberfläche (9c, 10c) vorgesehen sind, und wobei die Länge ($L_W$) einer Wellenberg-Scherfläche ($SF_W$) in Förderrichtung der Schmelze gesehen vergleichsweise lang ausgebildet ist, insbesondere im Vergleich zur Breite ($B_4$) des Sperrstegs, und/oder die Breite ($B_6$) des Scherstegs (6) zumindest abschnittsweise vergleichsweise breit ausgebildet ist, insbesondere im Vergleich zur Breite ($B_4$) des Sperrstegs und vorzugsweise in den als Schersteg-Scherfläche ($SF_S$) ausgebildeten Abschnitten der Oberfläche (6a) des Scherstegs (6), **dadurch gekennzeichnet, dass** sich eine oder mehrere Wellenberg-Scherflächen ($SF_W$) auf der gleichen Höhe befinden wie die Oberfläche (6a) des Scherstegs (6), wobei derjenige Abschnitt der Oberfläche (6a) des Scherstegs (6), welcher im Bereich einer Wellenberg-Scherfläche ($SF_W$) liegt, eine zugeordnete Schersteg-Scherfläche ($SF_{SZ}$) darstellt, wobei eine Wellenberg-Scherfläche ($SF_W$) und eine zugeordnete Schersteg-Scherfläche ($SF_{SZ}$) zusammen eine Gesamt-Scherfläche (SFn) bilden, wobei eine bestimmte Gesamt-Scherfläche (SFn) mit der Innenwand des Zylinders (2) einen Scherflächen-Scherspalt (SZ) gemäß einer für diese Gesamt-Scherfläche (SFn) vorgegebenen Scherspalt-Größe Δn (n=1,2,3...) bildet, und wobei in beiden Wave-Schneckengängen (7, 8) mehrere Gesamt-Scherflächen (SFn) vorliegen und die Scherspalt-Größe Δn (n=1, 2, 3...) in Förderrichtung der Schmelze kleiner wird.

**2.** Plastifiziereinheit nach Anspruch 1,
**dadurch gekennzeichnet,**
**dass** in Bezug auf den Schneckendurchmesser D die Länge ($L_W$) einer Wellenberg-Scherfläche ($SF_W$) in Förderrichtung der Schmelze gesehen ein Maß von mindestens 0,15xD, vorzugsweise größer oder gleich 0,20xD, ganz besonders bevorzugt größer oder gleich 0,30xD aufweist, und/oder dass die Breite ($B_6$) des Scherstegs (6) zumindest abschnittsweise ein Maß von mindestens 0,15xD, vorzugsweise größer oder gleich 0,20xD, ganz besonders bevorzugt größer oder gleich 0,30xD aufweist, wobei die Breite ($B_6$) des Scherstegs (6) vorzugsweise in den als Schersteg-Scherfläche ($SF_S$) ausgebildeten Abschnitten der Oberfläche (6a) des Scherstegs (6) das vorgenannte Maß aufweist.

**3.** Plastifiziereinheit nach Anspruch 1 oder 2,
**dadurch gekennzeichnet,**
**dass** die Oberfläche (6a) des Scherstegs (6) mit der Innenwand des Zylinders (2) einen Schersteg-Scherspalt bildet, dass die Oberfläche (9c, 10c) einer Wellenberg-Scherfläche ($SF_W$) mit der Innenwand des Zylinders (2) einen Wellenberg-Scherspalt bildet, und dass die Größe des Schersteg-Scherspaltes zumindest im Bereich einer Schersteg-Scherfläche ($SF_S$) einen Wert zwischen 0,2mm bis 2,0mm, vorzugsweise zwischen 0,3mm bis 0,9mm, ganz besonders bevorzugt zwischen 0,4mm bis 0,8mm, aufweist und/oder die Größe des Wellenberg-Scherspaltes einen Wert zwischen 0,2mm bis 2,0mm, vorzugsweise zwischen 0,3mm bis 0,9mm, ganz besonders bevorzugt zwischen 0,4 bis 0,8mm, aufweist.

**4.** Plastifiziereinheit nach einem der vorstehenden Ansprüche,
**dadurch gekennzeichnet,**
**dass** eine oder mehrere Wellenberg-Scherflächen ($SF_W$) zumindest im Bereich einer Schersteg-Scherfläche ($SF_S$) auf der gleichen Höhe liegen wie die Oberfläche (6a) des Scherstegs (6), und/oder dass eine oder mehrere Wellenberg-Scherflächen ($SF_W$) zumindest im Bereich einer Schersteg-Scherfläche ($SF_S$) niedriger liegen wie die Oberfläche (6a) des Scherstegs (6) und/oder dass eine oder mehrere Wellenberg-Scherflächen ($SF_W$) zumindest im Bereich einer Schersteg-Scherfläche ($SF_S$) höher liegen wie die Oberfläche (6a) des Scherstegs (6).

**5.** Plastifiziereinheit nach einem der vorstehenden Ansprüche,
**dadurch gekennzeichnet,**
**dass** die Oberfläche (6a) des Scherstegs (6) in Förderrichtung der Schmelze gesehen ein Profil aufweist, insbesondere ein stufenförmiges oder ein wellenförmiges Profil, wobei das Profil vorzugsweise derart gestaltet ist, dass die Oberfläche (6a) des Scherstegs (6) im Bereich eines Wellenbergs (9, 10) niedriger liegt als in den anderen Bereichen, und dass im Bereich eines Wellentals die Oberfläche (6a) des Scherstegs (6) vorzugsweise auf der gleichen Höhe liegt wie die Oberfläche des Sperrstegs (4).

**6.** Plastifiziereinheit nach einem der vorstehenden Ansprüche,
**dadurch gekennzeichnet,**
**dass** die Größe des Schersteg-Scherspalts und/oder die Größe des Wellenberg-Scherspalts in Förderrichtung der Schmelze kleiner werden.

**7.** Plastifiziereinheit nach einem der vorstehenden Ansprüche,
**dadurch gekennzeichnet, dass**
im Bereich einer Gesamt-Scherfläche (SFn) die Breite ($B_6$) des Scherstegs (6) an seiner Oberfläche (6a) kleiner oder gleich groß ist wie die Länge $L_W$ einer Wellenberg-Scherfläche ($SF_W$) in Förderrichtung der Schmelze gesehen, wobei die Breite ($B_6$) vorzugsweise einen unteren Grenzwert zwischen 50% und 60% und einen oberen Grenzwert zwischen 80% und 90% der Länge $L_W$ aufweist.

**8.** Plastifiziereinheit nach einem der vorstehenden Ansprüche,
**dadurch gekennzeichnet, dass**
die Anordnung der Wellenberg-Scherflächen ($SF_W$) und die Länge $L_W$ der Wellberg-Scherflächen ($SF_W$) derart ist, dass die Wellenberg-Scherflächen ($SFW_7$) des einen Wave-Schneckengangs (7) und die Wellenberg-Scherflächen ($SFW_8$) des anderen Wave-Schneckengangs (8) in Förderrichtung der Schmelze gesehen voneinander beabstandet sind, wobei vorzugsweise einer Wellenberg-Scherfläche ($SF_W$) in dem einen Wave-Schneckengang (7, 8) ein Wellental (12) in dem anderen Wave-Schneckengang (8, 7) zugeordnet ist.

**9.** Plastifiziereinheit nach einem der vorstehenden Ansprüche,
**dadurch gekennzeichnet, dass**

ein Wellenberg (9, 10) in Förderrichtung der Schmelze gesehen eine vor der Wellenberg-Scherfläche (SF$_W$) liegende ansteigende Flanke (13) und eine nach der Wellenberg-Scherfläche (SF$_W$) liegende abfallende Flanke (14) aufweist, wobei die ansteigende Flanke (13) mit der Oberfläche (6a) des Scherstegs (6) einen ersten Winkel ($\alpha$) bildet, wobei die abfallende Flanke (14) mit der Oberfläche (6a) des Scherstegs (6) einen zweiten Winkel ($\beta$) bildet, und wobei der erste Winkel ($\alpha$) kleiner ist als der zweite Winkel ($\beta$).

10. Plastifiziereinheit nach einem der vorstehenden Ansprüche,
**dadurch gekennzeichnet, dass**
der Zylinder mit der mit einem Scherabschnitt (B) ausgebildeten Schnecke einen ersten Zylinder (18) mit einer ersten Schnecke (19) darstellt, dass zusätzlich zu dem ersten Zylinder (18) ein zweiter Zylinder (26) mit einer zweiten Schnecke (27) vorgesehen ist, dass der zweite Zylinder (26) an seinem vorderen Ende einen Schmelze-Auslass (28) aufweist, der in fluidischer Verbindung mit einem Schmelze-Einlass (29) im hinteren Bereich des ersten Zylinders (18) steht, dass der zweite Zylinder (26) für die Erzeugung eines aufgeschmolzenen Kunststoffmaterials (P) vorgesehen ist, wobei das aufgeschmolzene Kunststoffmaterial (P) von dem zweiten Zylinder (26) in den ersten Zylinder (18) übergeben werden kann, dass an dem ersten Zylinder (18) ein Einlass für die Zugabe von Füllstoff, insbesondere von Fasermaterial (F) vorgesehen ist, vorzugsweise für Schnittfasergranulat, und dass an dem ersten Zylinder (18) der Einlass für das Kunststoffmaterial (P) und der Einlass für den Füllstoff in Förderrichtung der Schmelze gesehen vor dem Scherabschnitt (B) angeordnet sind.

11. Spritzgießmaschine mit einer Schließeinheit (30) und einer Plastifizier- und Einspritzeinheit (15), wobei die Plastifizier- und Einspritzeinheit (15) eine Plastifiziereinheit nach einem der Ansprüche 1 bis 9 aufweist, und wobei die Schnecke (3) mit einem Drehantrieb (23) und einem Linearantrieb (24) wirkverbunden ist.

12. Spritzgießmaschine mit einer Schließeinheit (30) und einer Plastifizier- und Einspritzeinheit (17), wobei die Plastifizier- und Einspritzeinheit (17) eine Plastifiziereinheit nach Anspruch 10 aufweist, wobei die erste Schnecke (19) in dem ersten Zylinder (18) mit einem Drehantrieb (23) und einem Linearantrieb (24) wirkverbunden ist, und wobei die zweite Schnecke (27) in dem zweiten Zylinder (26) mit einem zweiten Drehantrieb (34) wirkverbunden ist.

13. Extrusionsanlage mit einer Plastifiziereinheit nach einem der Ansprüche 1 bis 9, wobei dem Zylinder (2) in Förderrichtung der Schmelze gesehen ein Extrusionswerkzeug und gegebenenfalls weitere Anlagenteile einer Extrusionsanlage nachgeschaltet sind, wobei es sich um Anlagenteile gemäß eines herzustellenden Extrusionserzeugnisses handelt.

## Claims

1. A plasticizing unit (1) for a plastic processing machine, in particular for an injection moulding machine or an extrusion system, comprising a cylinder (2) and a screw (3) disposed rotatably therein, wherein the screw (3) has a screw section configured as a shearing section (B), wherein in the shearing section (B), the screw (3) has a barrier flight (4) encircling the screw core in a helical manner, and a main screw thread (5) enclosed by the barrier flight (4), wherein a shearing flight (6) is disposed in the main screw thread (5), preferably running parallel to the barrier flight (4), wherein the shearing flight (6) has a smaller height than the barrier flight (4) at least in sections, and in these sections the surface (6a) of the shearing flight (6) forms a shearing flight shear surface (SF$_s$), wherein in the main screw thread (5), two wave screw threads (7, 8) are provided which run parallel to and spaced apart from one another by the shearing flight (6), wherein each of these wave screw threads (7, 8) has a thread base (15, 16), running in a wave-shaped manner in the transport direction of the melt, wherein the wave crests (9) of the one wave screw thread (7), viewed in the transport direction of the melt, are offset with respect to the wave crests (10) of the other wave screw thread (8), wherein in each wave screw thread (7, 8), one or more wave crests (9, 10) are provided with a surface (9c, 10c) configured as a plateau and forming a wave crest shear surface (SF$_w$), and wherein the length (L$_w$) of a wave crest shear surface (SF$_w$), viewed in the transport direction of the melt, is configured to be comparatively long, in particular compared to the width (B$_4$) of the barrier flight, and/or the width (B$_6$) of the shearing flight (6) is configured to be comparatively wide, at least in sections, in particular compared to the width (B$_4$) of the barrier flight and preferably in the sections of the surface (6a) of the shearing flight (6) formed as a shearing flight shear surface (SF$_s$),
**characterized in that**
one or more wave crest shear surfaces (SF$_w$) are situated at the same height as the surface (6a) of the shearing flight (6), wherein that section of the surface (6a) of the shearing flight (6) which lies in the region of a wave crest shear surface (SF$_w$), represents an associated shearing flight shear surface (SF$_{SZ}$), wherein a wave crest shear surface ($SF_w$) and an associated shearing flight shear surface ($SF_{SZ}$) together form an overall shear surface ($SF_n$), wherein a specified overall shear surface ($SF_n$) forms with the inner wall of the cylinder (2) a shear surface shearing gap (Sz) in accordance with a predetermined shearing gap size $\Delta n$ (n=1, 2, 3...) for this overall shear surface ($SF_n$), and wherein a plurality of overall shear surfaces ($SF_n$) are present in both wave screw threads (7, 8) and the shearing gap size $\Delta n$ (n=1, 2, 3...) becomes smaller in the transport direction of the melt.

2. The plasticizing unit as claimed in claim 1,
**characterized in that**
with respect to the screw diameter D, the length ($L_w$) of a wave crest shear surface ($SF_w$), viewed in the transport direction of the melt, has a dimension of at least $0.15 \times D$, preferably greater than or equal to $0.20 \times D$, more particularly preferably greater than or equal to $0.30 \times D$, and/or **in that** the width ($B_6$) of the shearing flight (6) has, at least in sections, a dimension of at least $0.15 \times D$, preferably greater than or equal to $0.20 \times D$, more particularly preferably greater than or equal to $0.30 \times D$, wherein the width ($B_6$) of the shearing flight (6) preferably has the aforementioned dimension in the sections of the surface (6a) of the shearing flight (6) configured as shearing flight shear surfaces ($SF_s$).

3. The plasticizing unit as claimed in claim 1 or claim 2,
**characterized in that**
the surface (6a) of the shearing flight (6) forms a shearing flight shearing gap with the inner wall of the cylinder (2), **in that** the surface (9c, 10c) of a wave crest shear surface ($SF_w$) forms a wave crest shearing gap with the inner wall of the cylinder (2), and **in that** at least in the region of a shearing flight shear surface ($SF_s$), the size of the shearing flight shearing gap has a value of between 0.2 mm to 2.0 mm, preferably between 0.3 mm to 0.9 mm, more particularly preferably between 0.4 mm to 0.8 mm and/or the size of the wave crest shearing gap has a value of between 0.2 mm to 2.0 mm, preferably between 0.3 mm to 0.9 mm, more particularly preferably between 0.4 to 0.8 mm.

4. The plasticizing unit as claimed in one of the preceding claims,
**characterized in that**
at least in the region of a shearing flight shear surface ($SF_s$), one or more wave crest shear surfaces ($SF_W$) are at the same height as the surface (6a) of the shearing flight (6), and/or **in that** at least in the region of a shearing flight shear surface ($SF_s$), one or more wave crest shear surfaces ($SF_w$) are lower than the surface (6a) of the shearing flight (6) and/or **in that** at least in the region of a shearing flight shear surface ($SF_s$), one or more wave crest shear surfaces ($SF_W$) are higher than the surface (6a) of the shearing flight (6).

5. The plasticizing unit as claimed in one of the preceding claims,
**characterized in that**
viewed in the transport direction of the melt, the surface (6a) of the shearing flight (6) has a profile, in particular a step-shaped or a wave-shaped profile, wherein the profile is preferably configured in a manner such that the surface (6a) of the shearing flight (6) in the region of a wave crest (9, 10) is lower than in the other regions, and **in that** in the region of a wave valley, the surface (6a) of the shearing flight (6) is preferably at the same height as the surface of the barrier flight (4).

6. The plasticizing unit as claimed in one of the preceding claims,
**characterized in that**
the size of the shearing flight shearing gap and/or the size of the wave crest shearing gap become smaller in the transport direction of the melt.

7. The plasticizing unit as claimed in one of the preceding claims,
**characterized in that**
in the region of an overall shear surface ($SF_n$), the width ($B_6$) of the shearing flight (6) at its surface (6a) is smaller than or equal in size to the length ($L_w$) of a wave crest shear surface ($SF_w$), viewed in the transport direction of the melt, wherein the width ($B_6$) preferably has a lower threshold value of between 50% and 60% and an upper threshold value of between 80% and 90% of the length ($L_w$).

8. The plasticizing unit as claimed in one of the preceding claims,
**characterized in that**
the arrangement of the wave crest shear surfaces ($SF_w$) and the length ($L_w$) of the wave crest shear surfaces ($SF_w$) is such that the wave crest shear surfaces ($SF_{W7}$) of the one wave screw thread (7) and the wave crest shear surfaces ($SF_{W8}$) of the other wave screw thread (8), viewed in the transport direction of the melt, are spaced apart from one another, wherein preferably, a wave crest shear surface ($SF_w$) in the one wave screw thread (7, 8) is associated with a wave valley (12) in the other wave screw thread (8, 7).

9. The plasticizing unit as claimed in one of the preceding claims,
   **characterized in that**
   viewed in the transport direction of the melt, a wave crest (9, 10) has an ascending flank (13) in front of the wave crest shear surface ($SF_W$) and a descending flank (14) after the wave crest shear surface ($SF_w$), wherein the rising flank (13) forms a first angle ($\alpha$) with the surface (6a) of the shearing flight (6), wherein the descending flank (14) forms a second angle ($\beta$) with the surface (6a) of the shearing flight (6), and wherein the first angle ($\alpha$) is smaller than the second angle ($\beta$).

10. The plasticizing unit as claimed in one of the preceding claims,
    **characterized in that**
    the cylinder with the screw formed with a shearing portion (B) constitutes a first cylinder (18) with a first screw (19), **in that**, in addition to the first cylinder (18), a second cylinder (26) with a second screw (27) is provided, **in that** the second cylinder (26) has a melt outlet (28) at its front end which is in fluid communication with a melt inlet (29) in the rear region of the first cylinder (18), **in that** the second cylinder (26) is provided for the production of a molten plastic material (P), wherein the molten plastic material (P) may be transferred from the second cylinder (26) into the first cylinder (18), **in that** at the first cylinder (18), an inlet is provided for the addition of filler, in particular fibre material (F), preferably cut fibre granulate, and **in that** at the first cylinder (18), the inlet for the plastic material (P) and the inlet for the filler, viewed in the transport direction of the melt, are disposed in front of the shearing portion (B).

11. An injection moulding machine with a clamping unit (30) and with a plasticizing and injection unit (15), wherein the plasticizing and injection unit (15) has a plasticizing unit as claimed in one of claims 1 to 9, and wherein the screw (3) is operatively connected to a rotary drive (23) and a linear drive (24).

12. An injection moulding machine with a clamping unit (30) and with a plasticizing and injection unit (17), wherein the plasticizing and injection unit (17) has a plasticizing unit as claimed in claim 10, wherein the first screw (19) in the first cylinder (18) is operatively connected to a rotary drive (23) and to a linear drive (24), and wherein the second screw (27) in the second cylinder (26) is operatively connected to a second rotary drive (34).

13. An extrusion system with a plasticizing unit as claimed in one of claims 1 to 9, wherein an extrusion tool and, if applicable, further system parts of an extrusion system are disposed downstream of the cylinder (2) viewed in the transport direction of the melt, wherein the system parts relate to an extruded product which is to be produced.

**Revendications**

1. Unité de plastification (1) pour une machine traitant du plastique, en particulier pour une machine de moulage par injection ou une installation d'extrusion, comprenant un cylindre (2) et une vis sans fin (3) logée dedans en rotation, dans laquelle la vis sans fin (3) présente un tronçon de vis sans fin formé en tant que tronçon de cisaillement (B), dans laquelle dans le tronçon de cisaillement (B), la vis sans fin (3) présente un filet de blocage (4) hélicoïdal passant autour de l'âme de la vis sans fin et un pas principal de vis sans fin (5) enfermé par le filet de blocage (4), dans laquelle un filet de cisaillement (6) essentiellement parallèle au filet de blocage (4) est disposé dans le pas principal de vis sans fin (5), dans laquelle le filet de cisaillement (6) présente au moins par tronçons une hauteur plus faible que le filet de blocage (4) et dans ces tronçons, la surface (6a) du filet de cisaillement (6) forme une face de cisaillement de filet de cisaillement ($SF_s$), dans laquelle deux pas de vis sans fin ondulés (7, 8) parallèles entre eux et distants entre eux par le filet de cisaillement (6) sont prévus dans le pas principal de vis sans fin (5), dans laquelle chacun de ces pas de vis sans fin ondulés (7, 8) présente un fond de pas (15, 16) ondulé dans le sens de transport de la matière fondue, dans laquelle les crêtes d'onde (9) de l'un pas de vis sans fin ondulés (7), vu dans le sens de transport de la matière fondue, sont décalées par rapport aux crêtes d'onde (10) de l'autre pas de vis sans fin ondulé (8), dans laquelle dans chaque pas de vis sans fin ondulé (7, 8) sont prévues une ou plusieurs crête(s) d'onde (9, 10) avec une surface (9c, 10c) formée en tant que plateau et formant une face de cisaillement de crête d'onde ($SF_W$), et dans laquelle la longueur ($L_W$) d'une face de cisaillement de crête d'onde ($SF_W$), vu dans le sens de transport de la matière fondue, est conçue longue en comparaison, en particulier en comparaison avec la largeur ($B_4$) du filet de blocage, et/ou la largeur ($B_6$) du filet de cisaillement (6) est conçue large en comparaison, au moins par tronçons, en particulier en comparaison avec la largeur ($B_4$) du filet de blocage et de préférence dans les tronçons de la surface (6a) du filet de cisaillement (6) conçus en tant que face de cisaillement de filet de cisaillement ($SF_s$),

**caractérisée en ce que**
une ou plusieurs face(s) de cisaillement de crête d'onde ($SF_W$) se trouvent à la même hauteur que la surface (6a) du filet de cisaillement (6), dans laquelle le tronçon de la surface (6a) du filet de cisaillement (6) qui se trouve au niveau d'une face de cisaillement de crête d'onde ($SF_w$), représente une face de cisaillement de filet de cisaillement attribuée ($SF_{SZ}$), dans laquelle une face de cisaillement de crête d'onde ($SF_W$) et une face de cisaillement de filet de cisaillement attribuée ($SF_{SZ}$) forment ensemble une face de cisaillement totale ($SF_n$), dans laquelle une face de cisaillement totale ($SF_n$) définie forme avec la paroi intérieure du cylindre (2) une fente de cisaillement de face de cisaillement (Sz) selon une grandeur de fente de cisaillement $\Delta n$ (n=1, 2, 3...) prédéfinie pour cette face de cisaillement totale ($SF_n$), et dans laquelle plusieurs faces de cisaillement totales ($SF_n$) sont présentes dans les deux pas de vis sans fin ondulés (7, 8) et la grandeur de fente de cisaillement $\Delta n$ (n=1, 2, 3...) est plus petite dans le sens de transport de la matière fondue.

2. Unité de plastification selon la revendication 1,
   **caractérisée en ce**
   **qu'**en rapport au diamètre de vis sans fin D, la longueur ($L_W$) d'une face de cisaillement de crête d'onde ($SF_w$), vu dans le sens de transport de la matière fondue, présente une dimension d'au moins 0,15xD, de préférence supérieure ou égale à 0,20xD, plus particulièrement de préférence supérieure ou égale à 0,30xD, et/ou que la largeur ($B_6$) du filet de cisaillement (6) présente au moins par tronçons une dimension d'au moins 0,15xD, de préférence supérieure ou égale à 0,20xD, plus particulièrement de préférence supérieure ou égale à 0,30xD, dans laquelle la largeur ($B_6$) du filet de cisaillement (6) présente la dimension mentionnée avant, de préférence dans les tronçons formés en tant que face de cisaillement de filet de cisaillement ($SF_S$) de la surface (6a) du filet de cisaillement (6).

3. Unité de plastification selon la revendication 1 ou 2,
   **caractérisée en ce**
   **que** la surface (6a) du filet de cisaillement (6) forme avec la paroi intérieure du cylindre (2) une fente de cisaillement de filet de cisaillement, que la surface (9c, 10c) d'une face de cisaillement de crête d'onde ($SF_W$) forme avec la paroi intérieure du cylindre (2) une fente de cisaillement de crête d'onde et que la grandeur de la fente de cisaillement de filet de cisaillement présente au moins au niveau d'une face de cisaillement de filet de cisaillement ($SF_s$), une valeur entre 0,2mm et 2mm, de préférence entre 0,3mm et 0,9mm, tout particulièrement de préférence entre 0,4mm et 0,8mm et/ou que la grandeur de la fente de cisaillement de crête d'onde présente une valeur entre 0,2mm et 2mm, de préférence entre 0,3mm et 0,9mm, tout particulièrement de préférence entre 0,4mm et 0,8mm.

4. Unité de plastification selon l'une des revendications précédentes,
   **caractérisée en ce**
   **qu'**une ou plusieurs face(s) de cisaillement de crête d'onde ($SF_W$), au moins au niveau d'une face de cisaillement de filet de cisaillement ($SF_S$), est/sont à la même hauteur que la surface (6a) du filet de cisaillement (6) et/ou qu'une ou plusieurs face(s) de cisaillement de crête d'onde ($SF_W$), au moins au niveau d'une face de cisaillement de filet de cisaillement ($SF_S$), est/sont plus basse(s) que la surface (6a) du filet de cisaillement (6) et/ou qu'un ou plusieurs face(s) de cisaillement de crête d'onde ($SF_W$), au moins au niveau d'une face de cisaillement de filet de cisaillement ($SF_S$), est/sont plus élevée(s) que la surface (6a) du filet de cisaillement (6).

5. Unité de plastification selon l'une des revendications précédentes,
   **caractérisée en ce**
   **que** la surface (6a) du filet de cisaillement (6) présente, vu dans le sens de transport de la matière fondue, un profil, en particulier un profil étagé ou ondulé, dans laquelle le profil est de préférence ainsi formé que la surface (6a) du filet de cisaillement (6) au niveau d'une crête d'onde (9, 10) est plus basse que dans les autres niveaux et qu'au niveau d'un creux d'onde, la surface (6a) du filet de cisaillement (6) est de préférence à la même hauteur que la surface du filet de blocage (4).

6. Unité de plastification selon l'une des revendications précédentes,
   **caractérisée en ce**
   **que** la grandeur de la fente de cisaillement de filet de cisaillement et/ou la grandeur de la fente de cisaillement de crête d'onde réduisent dans le sens de transport de la matière fondue.

7. Unité de plastification selon l'une des revendications précédentes,
   **caractérisée en ce**
   **qu'**au niveau d'une face de cisaillement totale ($SF_n$), la largeur ($B_6$) du filet de cisaillement (6) sur sa surface (6a) est inférieure ou égale à la longueur ($L_W$) d'une face de cisaillement de crête d'onde ($SF_W$), vu dans le sens de transport de la matière fondue, dans laquelle la largeur ($B_6$) présente de préférence une valeur limite inférieure entre 50 % et 60 % et une valeur limite supérieure entre 80 % et 90 % de la longueur ($L_W$).

8. Unité de plastification selon l'une des revendications précédentes,
   **caractérisée en ce**
   **que** l'agencement des faces de cisaillement de crête d'onde ($SF_W$) et la longueur ($L_W$) des faces de cisaillement de crête d'onde ($SF_W$) est tel que les faces de cisaillement de crête d'onde ($SF_{W7}$) de l'un pas de vis sans fin ondulé (7) et les faces de cisaillement de crête d'onde ($SF_{W8}$) de l'autre pas de vis sans fin ondulé (8), vu dans le sens de transport de la matière fondue, sont distantes l'une de l'autre, dans laquelle de préférence, à une face de cisaillement de crête d'onde ($SF_W$) dans l'un pas de vis sans fin ondulé (7, 8) correspond un creux d'onde (12) dans l'autre pas de vis sans fin ondulé (8, 7).

9. Unité de plastification selon l'une des revendications précédentes,
   **caractérisée en ce**
   **qu'**une crête d'onde (9, 10), vu dans le sens de transport de la matière fondue, présente un flanc ascendant (13) placé devant la face de cisaillement de crête d'onde ($SF_W$) et un flanc descendant (14) placé après la face de cisaillement de crête d'onde ($SF_w$), dans laquelle le flanc ascendant (13) forme avec la surface (6a) du filet de cisaillement (6) un premier angle ($\alpha$), dans laquelle le flanc descendant (14) forme avec la surface (6a) du filet de cisaillement (6) un second angle ($\beta$) et dans laquelle le premier angle ($\alpha$) est plus petit que le second angle ($\beta$).

10. Unité de plastification selon l'une des revendications précédentes,
    **caractérisée en ce**
    **que** le cylindre avec la vis sans fin formée avec un tronçon de cisaillement (B) représente un premier cylindre (18) avec une première vis sans fin (19), qu'en plus du premier cylindre (18), un second cylindre (26) avec une seconde vis sans fin (27) est prévu, que le second cylindre (26) présente sur son extrémité avant une sortie de matière fondue (28) qui est en liaison fluidique avec une entrée de matière fondue (29) à l'arrière du premier cylindre (18), que le second cylindre (26) est prévu pour produire un matériau plastique fondu (P), dans laquelle le matériau plastique fondu (P) peut passer du second cylindre (26) dans le premier cylindre (18), qu'une entrée pour l'ajout de charge, en particulier de matériau de fibres (F), de préférence pour du granulat de fibres coupées, est prévue sur le premier cylindre (18), et que sur le premier cylindre (18), l'entrée pour le matériau plastique fondu (P) et l'entrée pour la charge, vu dans le sens de transport de la matière fondue, sont disposées avant le tronçon de cisaillement (B).

11. Machine de moulage par injection comprenant une unité de fermeture (30) et une unité de plastification et d'injection (15), dans laquelle l'unité de plastification et d'injection (15) présente une unité de plastification selon l'une des revendications 1 à 9, et dans laquelle la vis sans fin (3) est reliée en coopération à un entraînement rotatif (23) et un entraînement linéaire (24).

12. Machine de moulage par injection comprenant une unité de fermeture (30) et une unité de plastification et d'injection (17), dans laquelle l'unité de plastification et d'injection (17) présente une unité de plastification selon la revendication 10, dans laquelle la première vis sans fin (19) dans le premier cylindre (18) est reliée en coopération à un entraînement rotatif (23) et un entraînement linéaire (24), et dans laquelle la seconde vis sans fin (27) dans le second cylindre (26) est reliée en coopération à un second entraînement en rotation (34).

13. Installation d'extrusion comprenant une unité de plastification selon l'une des revendications 1 à 9, dans laquelle un outil d'extrusion et le cas échéant d'autres parties d'installation d'une installation d'extrusion sont branchées en aval du cylindre (2), vu dans le sens de transport de la matière fondue, dans laquelle il s'agit de parties d'installation selon un produit extrudé à fabriquer.

Fig. 1

Fig. 2

Fig. 3

$\alpha < \beta$

Fig. 4

Fig. 5

Fig. 6

Fig. 7

14   'a   9c   9b   13

$\Delta 3$   6a   6a   6a   6a

$\Delta 2$   $\Delta 1$

$H_1$

$H_2$

Fig.8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4285600 A
- US 4356140 A
- DE 102012008023 B4
- EP 3098052 B1
- US 20180022003 A1
- WO 2019076561 A1
- JP S5328656 A
- US 6056430 A
- WO 0117750 A1
- US 3687423 A
- JP 2013208779 A